(19) Europäisches Patentamt
European Patent Office
Office européen des brevets

(11) **EP 3 254 932 B1**

(12) **EUROPEAN PATENT SPECIFICATION**

(45) Date of publication and mention of the grant of the patent:
**22.06.2022 Bulletin 2022/25**

(21) Application number: **16746604.4**

(22) Date of filing: **02.02.2016**

(51) International Patent Classification (IPC):
**B62D 6/00** *(2006.01)*          **B62D 113/00** *(2006.01)*

(52) Cooperative Patent Classification (CPC):
**B62D 5/0463**

(86) International application number:
**PCT/JP2016/053005**

(87) International publication number:
**WO 2016/125773 (11.08.2016 Gazette 2016/32)**

(54) **STEERING HOLDING DETERMINATION DEVICE FOR VEHICLES AND ELECTRIC POWER STEERING DEVICE PROVIDED WITH SAME**

LENKUNGSHALTEBESTIMMUNGSVORRICHTUNG FÜR FAHRZEUGE UND ELEKTRISCHE SERVOLENKVORRICHTUNG DAMIT

DISPOSITIF DE DÉTERMINATION DE MAINTIEN DE DIRECTION POUR VÉHICULES ET DISPOSITIF DE DIRECTION ASSISTÉE ÉLECTRIQUE FOURNI AVEC CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.02.2015   JP 2015018527**
**16.02.2015   JP 2015028002**
**17.02.2015   JP 2015028324**

(43) Date of publication of application:
**13.12.2017   Bulletin 2017/50**

(73) Proprietor: **NSK Ltd.**
**Tokyo 141-8560 (JP)**

(72) Inventors:
• **SAWADA, Hideki**
**Tokyo 141-8560 (JP)**

• **SUGAWARA, Takayoshi**
**Tokyo 141-8560 (JP)**
• **MINAKI, Ryo**
**Tokyo 141-8560 (JP)**

(74) Representative: **Luten, Martin Haaije**
**Arnold & Siedsma**
**Bezuidenhoutseweg 57**
**2594 AC The Hague (NL)**

(56) References cited:
**DE-A1- 4 333 161      JP-A- H0 976 929**
**JP-A- H09 156 526     JP-A- 2004 170 174**
**JP-A- 2007 118 839     JP-A- 2008 149 961**
**JP-A- 2008 149 971     JP-A- 2011 051 537**
**JP-A- 2014 125 036     JP-B2- 3 915 964**
**JP-B2- 4 815 958**

**Description**

Technical Field

The present invention relates to a steering holding judging apparatus for a vehicle that accurately and immediately judges a steering holding state of a steering system of a vehicle and appropriately performs a current limiting of the motor, and an electric power steering apparatus that is equipped with the above steering holding judging apparatus for the vehicle and provides the steering system of the vehicle with a steering assist force by means of a motor, and in particular to the steering holding judging apparatus for the vehicle that limits a current command value of the motor to the current which can maintain the steering holding state in a state of transiting from a steer-forward to the steering holding state, or detects a transition faster than a detection of entering the steering holding state, releases the current limiting and passes the suitable current when transiting from the steering holding state to the steer-forward, and the electric power steering apparatus equipped with the above steering holding judging apparatus for the vehicle.

Background Art

An electric power steering apparatus (EPS) which assist-controls a steering system of a vehicle by means of a rotational torque of a motor, applies the steering assist torque to a steering shaft or a rack shaft by means of a transmission mechanism such as gears or a belt through a reduction mechanism. In order to accurately generate the assist control torque (steering assist torque), such a conventional electric power steering apparatus performs a feedback control of a motor current. The feedback control adjusts a voltage supplied to the motor so that a difference between a steering assist command value (a current command value) and a detected motor current value becomes small, and the adjustment of the voltage applied to the motor is generally performed by an adjustment of a duty of a pulse width modulation (PWM) control.

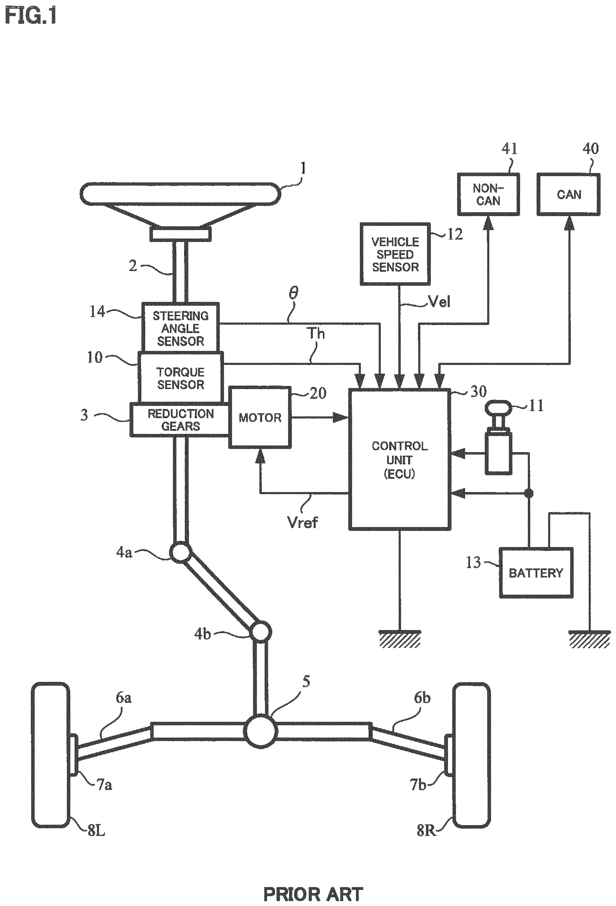

A general configuration of the conventional electric power steering apparatus will be described with reference to FIG.1. As shown in FIG.1, a column shaft (a steering shaft or a handle shaft) 2 connected to a steering wheel 1 is connected to steered wheels 8L and 8R through reduction gears 3, universal joints 4a and 4b, a rack-and-pinion mechanism 5, and tie rods 6a and 6b, further via hub units 7a and 7b. The column shaft 2 is provided with a torque sensor 10 for detecting a steering torque Th of the steering wheel 1 as a torsional torque of a torsion bar and a steering angle sensor 14 for detecting a steering angle θ, and a motor 20 for assisting a steering force of the steering wheel 1 is connected to the column shaft 2 through the reduction gears 3.

The electric power is supplied to a control unit (ECU) 30 for controlling the electric power steering apparatus from a battery 13, and an ignition key signal is inputted into the control unit 30 through an ignition key 11. The control unit 30 calculates a current command value, which is an assist command, on the basis of a steering torque Th detected by the torque sensor 10 and a vehicle speed Vel detected by a vehicle speed sensor 12, and controls a current supplied to the motor 20 by means of a voltage control value Vref obtained by performing compensation or the like to the calculated current command value.

The controller area network (CAN) 40 to send/receive various information and signals on the vehicle is connected to the control unit 30, and it is also possible to receive the vehicle speed Vel from the CAN. Further, a Non-CAN 41 is also possible to connect to the control unit 30, and the Non-CAN 41 sends and receives a communication, analogue/digital signals, electric wave or the like except for the CAN 40.

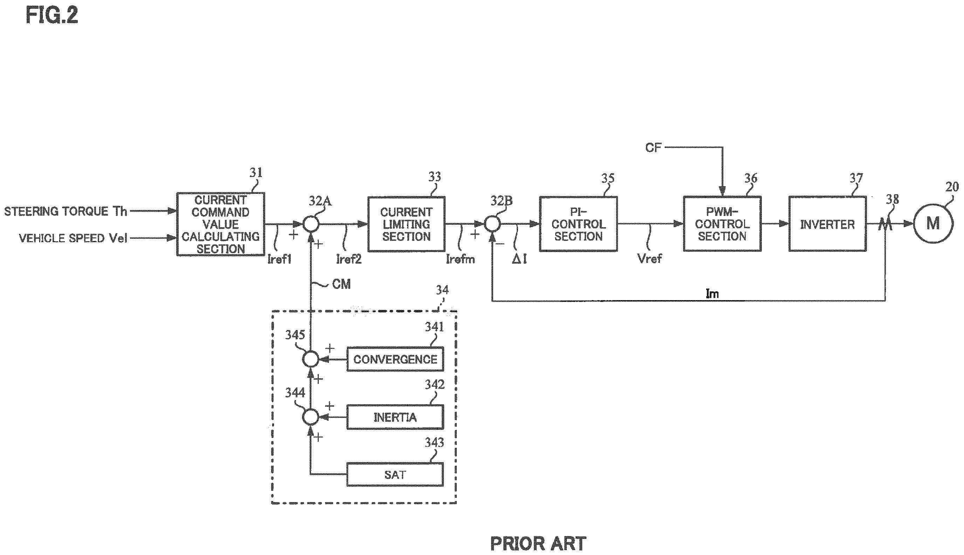

In such an electric power steering apparatus, the control unit 30 mainly comprises a CPU (Central Processing Unit) (including an MPU (Micro Processor Unit) and an MCU (Micro Controller Unit)), and general functions performed by programs within the CPU are, for example, shown in FIG.2.

The control unit 30 will be described with reference to FIG.2. The steering torque Th detected from the torque sensor 10 and the vehicle speed Vel detected from the vehicle speed sensor 12 are inputted into a current command value calculating section 31 which calculates a current command value Iref1, based on the steering torque Th and the vehicle speed Vel using an assist map or the like. The calculated current command value Iref1 is added with a compensation signal CM for improving characteristics from a compensating section 34 at an adding section 32A. The added current command value Iref2 is limited of the maximum value thereof at a current limiting section 33. The current command value Irefm limited of the maximum value is inputted into a subtracting section 32B, whereat a detected motor current value Im is subtracted from the current command value Irefm.

A deviation, which is the subtraction result at the subtracting section 32B, ΔI=(Irefm-Im) is proportional and integral (PI)-controlled at a PI-control section 35. The PI-controlled voltage control value Vref is inputted into a PWM-control section 36, whereat a duty thereof is calculated in synchronization with a carrier signal CF. The motor 20 is PWM-driven by an inverter 37 with a PWM signal. The motor current value Im of the motor 20 is detected by a motor current detector 38 and is inputted into the subtracting section 32B for the feedback.

The compensating section 34 adds a self-aligning torque (SAT) 343 detected or estimated and an inertia compensation value at an adding section 344. The addition result is further added with a convergence control value 341 at an adding section 345. The addition result is inputted into the adding section 32A as the compensation signal CM, thereby to improve the characteristics of the current command value.

In such an electric power steering apparatus, since the current that is required to maintain the steering holding state, considering a friction of the column shaft, has a hysteresis characteristic in a transition from the steer-forward to the steering holding state, which no steering has been done (variations of the motor rotational number and the steering assist torque is almost zero, and the motor rotational number is almost zero), it is preferred that the current limiting of the motor should be performed. In the steering holding state, since the large assist torque is not required in normal, it is necessary to surely avoid an unnecessary power consumption and a heat generation.

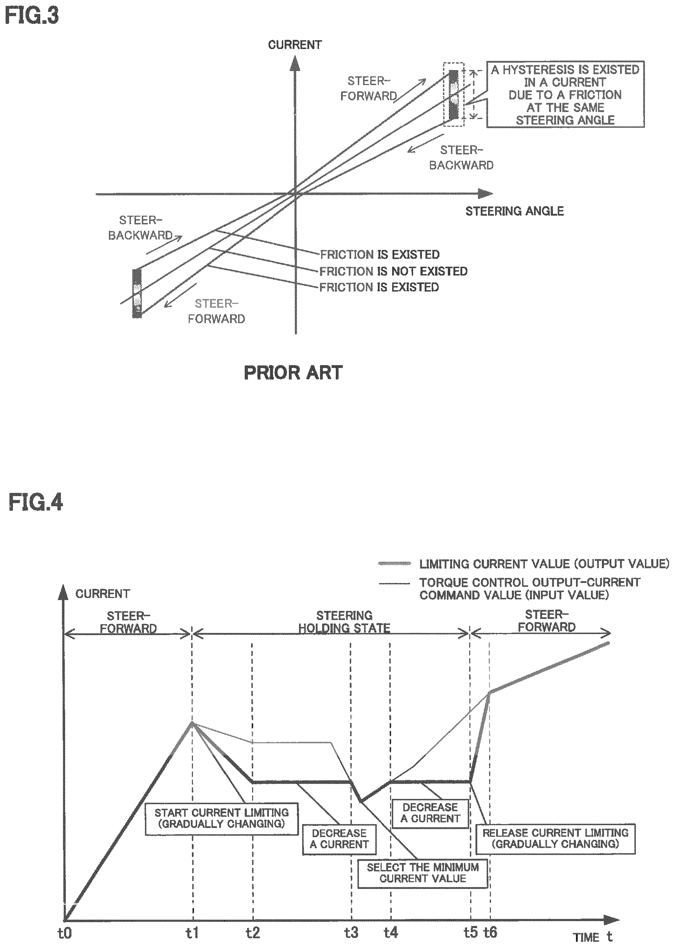

FIG.3 shows a general characteristic example of a steering angle and a current. In steer-forward and steer-backward of the handle, the hysteresis in the current is existed due to the friction in the same steering angle. In a case of no friction, as shown in FIG.3, the current against the steering angle varies linearly.

In a handle end hitting steering state (a rack end state) and the steering holding state, even though a driver does not steer-forward consciously, there is a possibility that a unnecessary steering assist torque is largely generated (an excessive motor current is passed). Then, it is requested that such a state is surely avoided.

As the electric power steering apparatus that decreases the steering holding force of the driver in order to suppress a drift of the vehicle, Japanese Patent No.4815958 B2 (Patent Document 1) is proposed. In Patent Document 1, in order to detect the steering holding state, a steering angle sensor, the vehicle speed sensor, a yaw rate sensor, the torque sensor and the motor rotational angle sensor are used. As the electric power steering apparatus that performs the current limiting of an assist motor in the steering holding state, Japanese Patent No.3915964 B2 (Patent Document 2) is proposed. Estimating values and the like that are calculated by various calculations using a motor voltage detecting value, a motor current detecting value, the torque sensor and the motor rotational angle sensor, are used for detecting the steering holding state by being extremely small values of a torque variation amount and a rotational number variation amount, and a considerable amount of the steering torque.

German Patent Application DE 43 33 161 A1 discloses a rear-wheel steering device (10), to stabilize movement of road vehicle with front and rear wheel steering, that contains a mechanism (18), which is connected mechanically via a transmission shaft (52) with the front wheel steering mechanism (14) for steering the front wheels (12). The rear-wheel steering mechanism steers the rear wheels blocked by the front wheel steering mechanism (14) so that a predetermined theoretical value for the rear wheel steering angle is achieved corresponding to the front wheel steering angle (theta F). The rear-wheel steering device (10) also contains a mechanism (20) for adjustment of the steering angle ratio, which is provided in the rear-wheel steering mechanism (18), and which adjusts and varies a steering angle ratio through the ratio of the front wheel steering angle to that of the rear-wheels.

Japanese Patent Application JP 2011 051537 A discloses an electric power steering system in which estimation accuracy of an electric angle is improved when sensorless control is performed. Provided is that state determination unit 115 determines to be in a steering retaining state when the absolute value of differential values eu', ev', ew' of induced voltage even in only one phase is not more than a determination value A close to zero. When it is determined to be in the steering retaining state, a wire-wound resistance calculation unit 116 sets the arithmetical value of induced voltages eu, ev, ew generated in an electric motor 20 to zero, and calculates wire-wound resistances Ru, Rv, Rw from motor terminal voltages Vu, Vv, Vw and motor currents Iu, Iv, Iw. A wire-wound resistance correction unit 117 updates the wire-wound resistances Ru, Rv, Rw in an arithmetic expression stored in each phase induced voltage calculation unit 111 to the value calculated by the wire resistance calculation unit 116.

The List of Prior Art Documents

Patent Documents

    Patent Document 1: Japanese Patent No.4815958 B2
    Patent Document 2: Japanese Patent No.3915964 B2
    Patent Document 3: German Patent Application No. 43 33 161 A1
    Patent Document 4: Japanese Patent Application No. 2011 051537 A

Summary of the Invention

Problems to be Solved by the Invention

Using the motor rotational angle sensor as Patent Documents 1 and 2, since the rotational number signal of the motor or the like includes a noise, a low pass filter (LPF) has to be used to decrease an influence of the noise, and then a delay for processing this process is occurred. It is necessary to set a certain threshold (the threshold is set larger than a noise) in order that a state which the motor rotational number is zero, which indicates the steering holding (motor is stopped), is judged. There are problems that the apparatus erroneously judges the steering holding when steering, the apparatus cannot judge the steering holding in the steering holding and the apparatus requires a time in judging the steering holding by being a cause of this threshold.

In the judgment of the steering torque, the steering holding state is judged by an amount (an absolute value) and a changing rate of the steering torque or the like. However, when judging the amount of the steering torque, there are problems that the apparatus can only detect the steering holding state in particular conditions (for example, hitting to the rack end or the like), and in a case that the changing rate of the steering torque, the apparatus erroneously judges the steering holding in gradually changing the steering torque since the judgement is performed by the changing rate against the time.

Further, in the electric power steering apparatus, considering the friction around the column shaft under a state that the motor generates a large torque and stops or almost stops just after transiting from a steer-forward to the steering holding state, there are problems of unnecessary power consumption and heat generation and the like because an excessive current is supplied to the motor in order to maintain the steering holding state.

Furthermore, when transiting from the steering holding state to the steer-forward, it is necessary to detect the transition faster than the detection of entering the steering holding state, release the current limiting, pass the suitable current and easily transit from the steering holding state (a hysteresis width is small).

The present invention has been developed in view of the above-described circumstances, and an object of the present invention is to provide the steering holding judging apparatus for the vehicle that surely judges the steer-forward, the steer-backward and the steering holding state, limits the current which can maintain the steering holding state utilizing the friction of the column shaft when transiting from the steer-forward to the steering holding state, or detects the transition faster than the detection of entering the steering holding state, releases the current limiting, passes the suitable current and easily transits from the steering holding state when transiting from the steering holding state to the steer-forward, and the electric power steering apparatus equipped with the above steering holding judging apparatus for the vehicle.

Further, another object of the present invention is to provide the steering holding judging apparatus for the vehicle that detects or does not erroneously judge the steering holding state under various circumstances which do not occur in unnecessary power consumption and heat generation and the like, can accurately and immediately detect the steering holding state even though the noise is superimposed to the signal which uses to the detection, and can appropriately perform the current limiting of the motor, and the electric power steering apparatus equipped with the steering holding judging apparatus for the vehicle.

Means for Solving the Problems

The present invention relates to the steering holding judging apparatus, the above-described object of the present invention is achieved by that comprising: at least two steering angle sensors to detect a steering angle of a steering system of a vehicle; and a steering state judging section to calculate a hysteresis central value using a hysteresis signal that sets a hysteresis width to steering signals from the two steering angle sensor, judge a steering state using the hysteresis central value, and output provisional steering information, wherein a steering holding state is detected based on the provisional steering information,
or comprising: a control unit to control a motor, which is coupled to a steering system of a vehicle, by means of a driving current; a steering angle detecting means to detect a column input-side angle and a column output-side angle of the steering system, and output a column input-side angle signal and a column output-side angle signal; a steering state judging section to output steering information and a steering holding signal of the steering system based on the column input-side angle signal and the column output-side angle signal; and a current limiting section to limit the driving current based on the steering information and the steering holding signal, wherein the steering state judging section comprises a hysteresis width setting section to calculate and set hysteresis widths "A" and "B" (< "A") to the column input-side angle signal and the column output-side angle signal, respectively; a hysteresis central value calculating section to calculate respective hysteresis central values of the hysteresis widths "A" and "B"; a hysteresis filter judging section to turn-ON or turn-OFF a hysteresis trigger signal based on the hysteresis central value of the hysteresis width "A"; and a switching judging section to output the steering information and the steering holding section based on the hysteresis central value of the hysteresis width "A" when the hysteresis signal is OFF, and the hysteresis central values of the hysteresis widths "A" and "B" when the hysteresis signal is ON.

The present invention relates to the electric power steering apparatus that calculates a torque control output current command value based on at least the steering torque, and assist-controls the steering system by driving the motor based on the torque control output current command value, the above-described object of the present invention is achieved by that comprising: the steering holding judging apparatus for the vehicle, or comprising: an angle detecting means to output a column input-side angle signal and a column output-side angle signal of the steering system; a steering state judging section to judge a steering state based on the column input-side angle signal and the column output-side angle signal, and output a steering holding signal and steering information; and a current limiting section to limit the torque control output current command value based on the column input-side angle signal, the column output-side angle signal, the steering holding signal and the steering information, wherein the current limiting section performs a current limiting of the torque control output current command value in a range of a current which a steering holding state is maintained.

Effects of the Invention

According to the electric power steering apparatus of the present invention, the unnecessary power consumption and the heat generation and so on are not occurred since the current command value is limited (gradually changed) in a range of the current which the steering holding state is maintained, considering the friction of the column shaft, when detecting the transition from the steer-forward to the steering holding state.

According to the steering holding judging apparatus for the vehicle of the present invention, the unnecessary power consumption and the heat generation and so on are not occurred since the current command value is limited (gradually changed) in a range of the current which the steering holding state is maintained, considering the friction of the column shaft, when detecting the transition from the steer-forward to the steering holding state. Because at least two detected steering angles (steering angle signals) are applied the hysteresis characteristic, and the steering holding state is detected by using the steering angle signals which are applied the hysteresis characteristic, an immediate detecting is possible without a filter process and the like even if a noise and the like is occurred, and it is possible to perform an accurate detecting in accordance with a steering state.

Further, when transiting from the steering holding state to the steer-forward, the apparatus detects the transition faster than the detection of entering the steering holding state, releases the current limiting, passes the suitable current and easily transits from the steering holding state (the hysteresis width is small).

Brief Description of the Drawings

In the accompanying drawings:

FIG.1 is a configuration diagram illustrating a general outline of an electric power steering apparatus;
FIG.2 is a block diagram showing a general configuration example of a control system of the electric power steering apparatus;
FIG.3 is a characteristic diagram illustrating a general relationship between a steering angle and a current;
FIG.4 is a timing chart showing a transition operating example of a steering of the present invention;
FIG.5 is a flowchart showing a principle of an operating example of the present invention;
FIG.6 is a block diagram showing a configuration example (the first embodiment) of the present invention;
FIG.7 is a block diagram showing a configuration example of a steering holding state judging section;
FIG.8 is a block diagram showing a configuration example of a current limiting section;
FIG.9 is a diagram showing a mounting example of sensors and a relationship of column angle signals which are used in the present invention;
FIG.10 is a flowchart showing an operating example of a steering state judging section (judging a steering holding) according to the present invention;
FIG.11 is a flowchart showing an operating example of the steering state judging section (judging a steering) according to the present invention;
FIG.12 is a flowchart showing an operating example of the present invention;
FIG.13A and FIG.13B are a waveform diagram of a steering angle and a waveform diagram of a current for describing the current limiting of the present invention, respectively;
FIG.14A and FIG.14B are diagrams showing judging examples of a handle steer-forward and a handle steer-backward according to the present invention, respectively;
FIG.I5 is a schematic diagram for describing the current limiting of the present invention;
FIG.16 is a timing chart showing an operating principle of the present invention;
FIG.17 is a block diagram showing a configuration example (the second embodiment) of the present invention;
FIG.18 is a block diagram showing a configuration example of a steering holding state judging section;
FIG.19 is a block diagram showing a configuration example of a hysteresis filter "A";
FIG.20 is a block diagram showing a configuration example of a hysteresis filter "B";
FIG.21 is a flowchart showing an operating example of a steering state judging according to the present invention;
FIG.22 is a flowchart showing an operating example of a hysteresis filter judging section of the present invention;

FIG.23 is a block diagram showing a configuration example (the third embodiment) of the present invention;

FIG.24 is a portion of a flowchart showing an operating example of the present invention;

FIG.25 is another portion of a flowchart showing an operating example of the present invention;

FIG.26 is a diagram showing an example of changing an actual steering angle and the like in the present invention and a prior art (in a case of generating a noise in a steering holding); and

FIG.27 is a diagram showing an example of changing an actual steering angle and the like in the present invention and a prior art (in a case of slowly steering).

Mode for Carrying Out the Invention

An electric power steering apparatus of the present invention detects a transition from a steer-forward of a handle to a steering holding state, and in the steering holding state, limits (gradually changes) a current command value in a range of a current that can maintain the steering holding state, considering a friction of a column shaft.

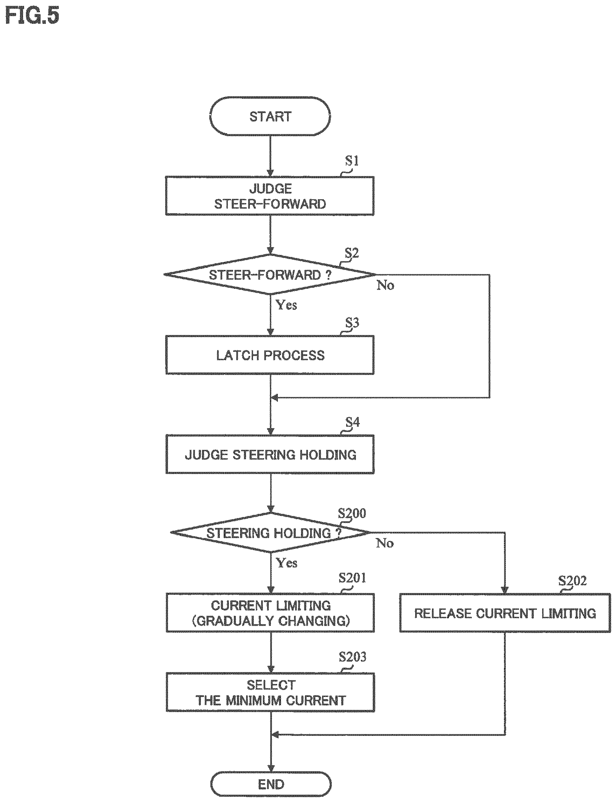

FIG.4 shows a transition operating example of a steering. Changing examples of a torque control output current command value (an input value) and a limiting current value (an output value) are showed in the steer-forward (a time point t0 to a time point t1), the steering holding state (the time point t1 to a time point t5) and the steer-forward (a time after the time point t5). A flowchart of FIG.5 shows the operating example.

The apparatus performs a judging of the steer-forward at the time point t1 (Step S1). In a case of the steer-forward (Step S2), the maximum value of the current command value is latched (Step S3). In a case of not the steer-forward in the Step S2, the process proceeds to a steering holding judging (Step S4).

As a result of the steering holding judging, in a case of the steering holding (Step S200), the current is limited (gradually changed) in a range of a current that can maintain the steering holding state (Step S201, the time point t1 to the time point t2). In the steering holding, by comparing the limiting current value to a target current (a target torque command □ a torque control output current command value), and selecting the smaller current value (minimum current) at the time point t3 (Step S203), the current command value enables to be limited to the current that can maintain the steering holding state (the time point t3 to the time point t4). When the steer-forward is started at the time point t5 (Step S200), the current limiting is immediately released (Step S202) and the process of the current limiting is ended.

As well, in FIG.4, in the steer-forward from the time point t0 to the time point t1, the steering holding state (current minimum value is selected) from the time point t3 to the time point t4 and the steer-forward after the time point t6, the torque control output current command value is the same as the limiting current value.

In the present invention, when detecting the transition from the steer-forward of the handle to the steering holding state, since the current command value is limited (gradually changed) in a range of the current that can maintain the steering holding state, the unnecessary power consumption and the heat generation or the like are not occurred.

Embodiments according to the present invention will be described with reference to the drawings.

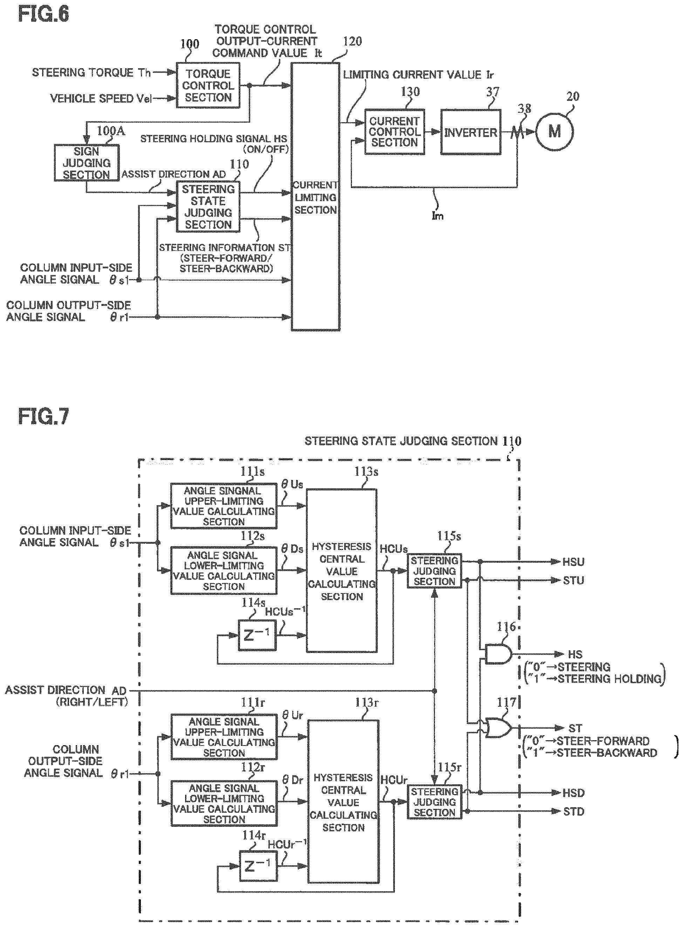

FIG.6 shows a block diagram of a first embodiment of the present invention. A steering torque Th and a vehicle speed Vel are inputted into a torque control section 100, and the torque control output current command value "It" that is calculated based on the steering torque Th and the vehicle speed Vel is inputted into a sign judging section 100A, which judges a sign (a direction) of the command value, and a current limiting section 120. A column input-side angle signal $\theta s1$ and a column output-side angle signal $\theta r1$ from angle sensors which arc provided with a column shaft are inputted into a steering state judging section 110. An assist direction AD from the sign judging section 100A is also inputted into the steering state judging section 110. A steering holding signal HS (ON ("1")/OFF ("0")) which is judged at the steering state judging section 110 and steering information ST (steer-forward ("0")/steer-backward ("1")) are inputted into the current limiting section 120. A limiting current value Ir from the current limiting section 120 and a motor current value Im are inputted into a current control section 130, and driving-control a motor 20 via an inverter 37. The current control section 130 comprises a proportional and integral (PI)-control section and a pulse width modulation (PWM)-control section.

The column input-side angle signal $\theta s1$ of the handle side and the column output-side angle signal $\theta r1$ of an intermediate shaft side are inputted into the steering state judging section 110, and hysteresis processes are performed to the column input-side angle signal $\theta s1$ and the column output-side angle signal $\theta r1$ by a configuration as shown in FIG.7.

At first, the column input-side angle signal $\theta s1$ is described with reference to FIG.7. The column input-side angle signal $\theta s1$ is inputted into an angle signal upper-limiting value calculating section IIIs and an angle signal lower-limiting value calculating section 112s. The angle signal upper-limiting value calculating section IIIs and the angle signal lower-limiting value calculating section 112s calculate an angle signal upper-limiting value $\theta Us$ and an angle signal lower-limiting value $\theta Ds$, respectively. The angle signal upper-limiting value $\theta Us$ and the angle signal lower-limiting value $\theta Ds$ are inputted into a hysteresis central value calculating section 113s. A hysteresis central value HCUs, which is calculated at the hysteresis central value section 113s based on the angle signal upper-limiting value $\theta Us$ and the angle signal lower-limiting value $\theta Ds$, is inputted into a steering judging section 115s and is latched at a latch section ($Z^{-1}$) 114s. A past value $HCUs^{-1}$ which is latched is inputted into the hysteresis central value section 113s. The steering judging section 115s outputs a steering holding signal HSU when judging the steering holding based on changing of the assist direction and the hysteresis central value HCUs, and outputs steering information STU when judging the steer-forward or the steer-backward.

The steering holding signal HSU is inputted into a logical product (AND) circuit 116, and the steering information STU is inputted into a logical sum (OR) circuit 117.

Next, the column output-side angle signal $\theta r1$ is described with reference to FIG.7. The column output-side angle signal $\theta r1$ is inputted into an angle signal upper-limiting value calculating section 111r and an angle signal lower-limiting value calculating section 112r. The angle signal upper-limiting value calculating section 111r and the angle signal lower-limiting value calculating section 112r calculate an angle signal upper-limiting value $\theta Ur$ and an angle signal lower-limiting value $\theta Dr$, respectively. The angle signal upper-limiting value $\theta Ur$ and the angle signal lower-limiting value $\theta Dr$ are inputted into a hysteresis central value calculating section 113r. A hysteresis central value HCUr, which is calculated at the hysteresis central value section 113r based on the angle signal upper-limiting value $\theta Ur$ and the angle signal lower-limiting value $\theta Dr$, is inputted into a steering judging section 115r and is latched at a latch section ($Z^{-1}$) 114r. A past value $HCUr^{-1}$ which is latched is inputted into the hysteresis central value section 113r. The steering judging section 115r outputs a steering holding signal HSD when judging the steering holding based on changing of the assist direction and the hysteresis central value HCUr, and outputs steering information STD when judging the steer-forward or the steer-backward.

The steering holding signal HSD is inputted into the logical product (AND) circuit 116, and the steering information STD is inputted into the logical sum (OR) circuit 117.

When the steering holding signals HSU and HSD are outputted as the steering holding state at the same time, the logical product (AND) circuit 116 outputs that the steering holding signal HS is "1" as the steering holding state. When the steering holding signals HSU and HSD are not outputted as the steering holding state at the same time, the logical product (AND) circuit 116 outputs that the steering holding signal HS is "0" as the steering state. When the steering informations STU and STD are outputted as the steer-forward at the same time, the logical sum (OR) circuit 117 outputs that the steering information ST is "0" as the steer-forward state. When the steering informations STU and STD are not outputted as the steer-forward at the same time, the logical sum (OR) circuit 117 outputs that the steering information ST is "1" as the steer-backward state.

The hysteresis width is set by considering following conditions (1) and (2).

(1) column input-side angle signal $\theta s1$:
a value that is larger than a noise width of the column input-side angle signal $\theta s1$ + a value that is smaller than 0.2 [deg] (changing by a spring rate)
(2) column output-side angle signal $\theta r1$:
a value that is larger than a noise width of the column output-side angle signal $\theta r1$ and is smaller than a friction of the column shaft

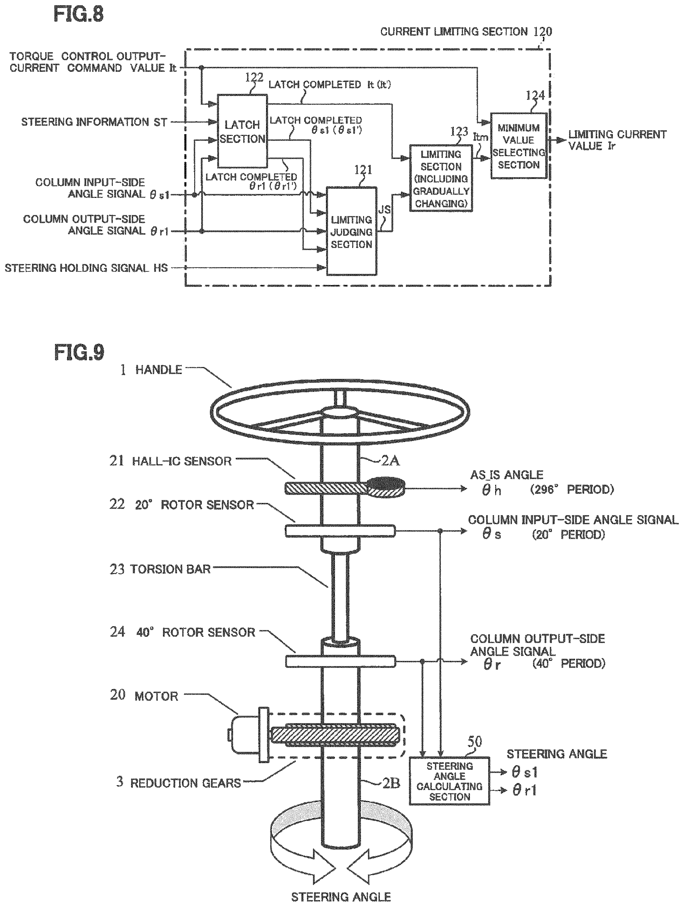

Further, the current limiting section 120 has a configuration as shown in for example, FIG.8, and the torque control output current command value "It", the steering information ST, the column input-side angle signal $\theta s1$ and the column output-side angle signal $\theta r1$ are inputted into a latch section 122 which performs the latch process. When the steering information ST is the steer-forward ("0"), the latch section 122 latches the torque control output current command value "It", the column input-side angle signal $\theta s1$ and the column output-side angle signal $\theta r1$, and a column input-side angle signal $\theta s1'$ and a column output-side angle signal $\theta r1'$, which are latched, and the steering holding signal HS are inputted into a limiting judging section 121. When the steering holding signal HS is the steering holding state ("1"), a difference between the column input-side angle signal $\theta s1'$ which is latched and the column output-side angle signal $\theta r1'$ which is latched is a predetermined amount or less and a difference between the column output-side angle signal $\theta r1'$ which is latched and the column output-side angle signal $\theta r1$ is a predetermined amount or less, the limiting judging section 121 judges that the current limiting is capable, and outputs the judging signal JS. The judging signal JS and the torque control output current command value It' which is latched are inputted into a limiting section 123 (including the gradually changing). A current Itm, which is limited at the limiting section 123, is inputted into a minimum value selecting section 124, and is compared to the torque control output current command value "It". The smaller one is selected, and a limiting current value Ir is outputted.

When the steering state is changed from the steering holding to the steer-forward or the steer-backward, the judging signal JS cannot be controlled because the steering holding signal HS is inputted into the limiting judging section 121. The control section selects the same value of the maximum current of the system as the limiting value, and the torque control output current command value "It" is outputted as the limiting current value Ir.

In the present invention, the steering holding is judged based on the column input-side angle signal $\theta s1$ of the handle side and the column output-side angle signal $\theta r1$ of the intermediate shaft side. In the electric power steering apparatus having a torsion bar, sensors for example, which are shown in FIG.9, are mounted to the column shaft (the handle shaft) 2, and the angle is detected. That is, a Hall-IC sensor 21 as an angle sensor, and a 20° rotor sensor 22 of the torque sensor input-side rotor are mounted to an input shaft 2A of the handle 1 side of the handle shaft 2. The Hall-IC sensor 21 outputs an AS_IS angle $\theta h$ having a 296° period. The 20° rotor sensor 22 is mounted to a position where a location of the handle 1 is closer than that of the torsion bar 23, and outputs the column input-side angle signal $\theta s$ having a 20° period. The column input-side angle signal $\theta s$ is inputted into the steering angle calculating section 40. A 40° rotor sensor 24 of the torque sensor output-side rotor is mounted to the output shaft 2B of the handle shaft 2, a column output-side angle signal $\theta r$ from the rotor sensor 24 is outputted from the 40° rotor sensor 24, and the column output-side angle signal $\theta r$ is inputted into the steering angle calculating section 50. The column input-side angle signal $\theta s$ and the column output-side angle signal $\theta r$ are calculated to an absolute angle at the steering angle calculating section 50, and a column input-side angle signal $\theta s1$ and a column output-side angle signal $\theta r1$, which are the absolute angle, are outputted from the steering angle calculating section 50. The column input-side angle signal $\theta s1$ and the column output-side angle signal $\theta r1$ which are detected in such a manner are inputted into the steering state judging section 110 and the current limiting section 120.

Actually, the column input-side angle signal $\theta s1$ and the column output-side angle signal $\theta r1$ are outputted through an anti-roll-over process (a process that transforms a saw-tooth wave to a straight line).

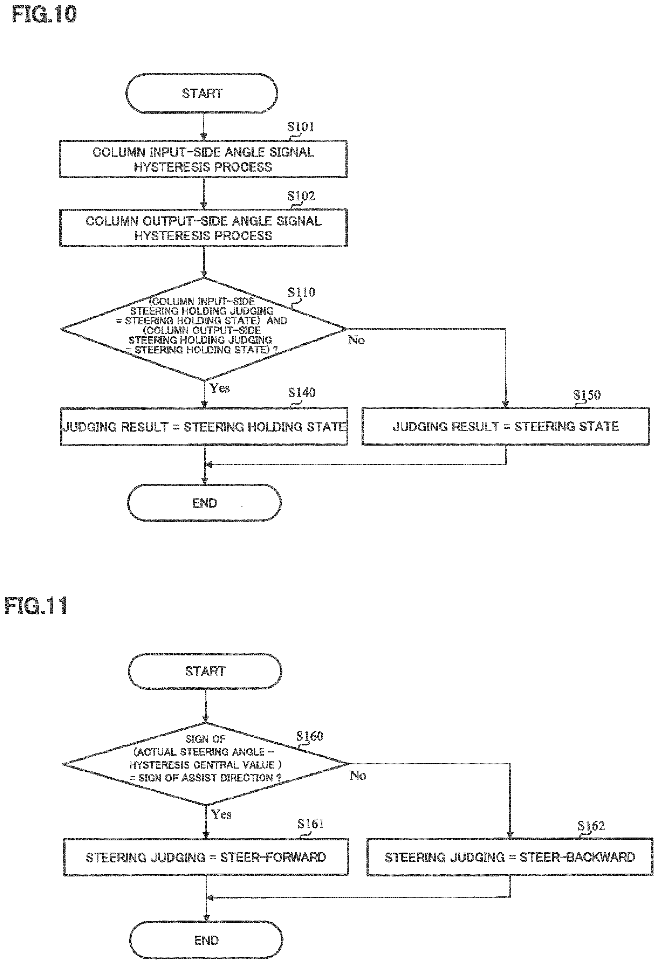

In such a configuration, an operation example of the steering state judging section 110 will be described with reference to a flowchart of FIG.10.

At first, a hysteresis process of the column input-side angle signal $\theta s1$ is performed (Step S101). Next, a hysteresis process of the column output-side angle signal $\theta r1$ is performed (Step S102). Then, the apparatus judges whether the column input-side steering holding judging and the column output-side steering holding judging arc the steering holding state at the same time, that is, whether "the column input-side steering holding judging" = "steering holding" and "the column output-side steering holding judging" = "steering holding" are satisfied (Step S110). In a case that the above conditions are coincident, the steering holding signal HS is outputted to "1" that means as the steering holding state (Step S140). In a case that the above conditions are not coincident, the steering holding signal HS is outputted to "0" that means as the steering state (Step S150).

At the same time, as shown in FIG.11, a steering judging whether the column input-side angle signal $\theta s1$ is the steer-forward or the steer-backward, and a steering judging whether the column output-side angle signal $\theta r1$ is the steer-forward or the steer-backward are performed. The apparatus judges whether the column input-side steering judging and the column output-side steering judging are the steer-forward at the same time (Step S160). In a case that the above conditions are coincident, the steering information ST is outputted to "1" that means as the steer-forward (Step S161). In a case that the above conditions are not coincident, the steering information ST is outputted to "0" that means as the steer-backward (Step S162). The steering holding signal HS and the steering information ST are inputted into the current limiting section 120.

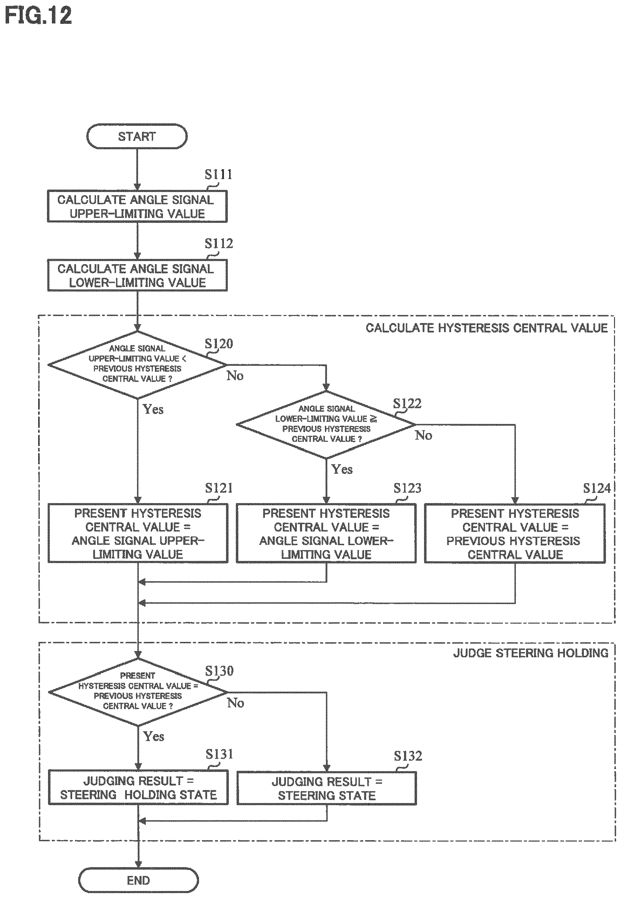

Next, a hysteresis process of the column input-side angle signal $\theta s1$ (Step S101) and a hysteresis process of the column output-side angle signal $\theta r1$ (Step S102) in FIG.10 will be described with reference to a flowchart of FIG.12 and FIG.9 in detail. Since the hysteresis process of the column input-side angle signal $\theta s1$ is the same operation as the column output-side angle signal $\theta r1$, the hysteresis process of the column input-side angle signal $\theta s1$ only will be described.

At first, the column input-side angle signal $\theta s1$ is inputted into an angle signal upper-limiting value calculating section IIIs, and an angle signal upper-limiting value $\theta Us$ is calculated (Step S111). The column input-side angle signal $\theta s1$ is inputted into an angle signal lower-limiting value calculating sections 112s, and an angle signal lower-limiting value $\theta Ds$ is calculated (Step S112). The calculation order may be changed.

The angle signal upper-limiting value $\theta Us$ and the angle signal lower-limiting value $\theta Ds$ are inputted into a hysteresis central value calculating section 113s, and a hysteresis central value $HCUs$ is calculated at the hysteresis central value calculating section 113s. It is judged whether the angle signal upper-limiting value $\theta Us$ is smaller than a previous hysteresis central value ($HCUs^{-1}$) or not (Step S120). In a case that the angle signal upper-limiting value $\theta Us$ is smaller than the previous hysteresis central value ($HCUs^{-1}$), the angle signal upper-limiting value $\theta Us$ is set as a present hysteresis central value (Step S121). In the Step S120, in a case that it is judged that the angle signal upper-limiting value $\theta Us$ is not smaller than the previous hysteresis central value ($HCUs^{-1}$), it is judged whether the angle signal lower-limiting value $\theta Ds$ is the previous hysteresis central value ($HCUs^{-1}$) or more, or not (Step S122). In a case that it is judged that the angle signal lower-limiting value $\theta Ds$ is the previous hysteresis central value ($HCUs^{-1}$) or more, the angle signal lower-limiting value $\theta Ds$ is set as the present hysteresis central value (Step S123). In the Step S122, in a case that it is judged that the angle signal lower-limiting value $\theta Ds$ is not the previous hysteresis central value ($HCUs^{-1}$) or more, the previous hysteresis central value is set as the present hysteresis central value (Step S124). In this manner, the hysteresis central value $HCUs$ is calculated.

Thereafter, a steering judging section 115s which the hysteresis central value $HCUs$ is inputted, judges whether the present hysteresis central value is coincident with the previous hysteresis central value (Step S130). In a case that the present hysteresis central value is coincident with the previous hysteresis central value, the steering holding signal HSU is outputted as the judging result (Step S131). In a case that the present hysteresis central value is not coincident with the previous hysteresis central value, the steering information STU is outputted as the judging result (Step S132).

The operation (the hysteresis process) of the column output-side angle signal θr1 is quite the same as that of the column input-side angle signal θs1. The operation (the hysteresis process) of the column output-side angle signal θr1 may be performed before or after that of the column input-side angle signal θs1.

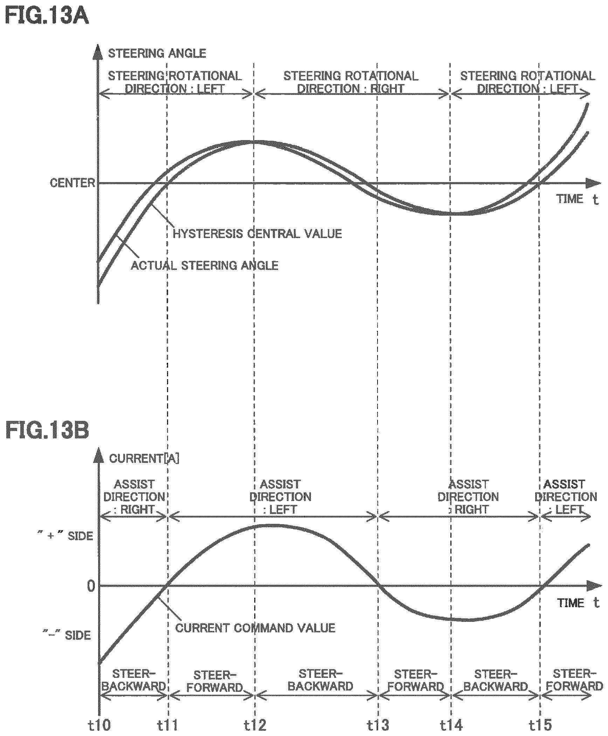

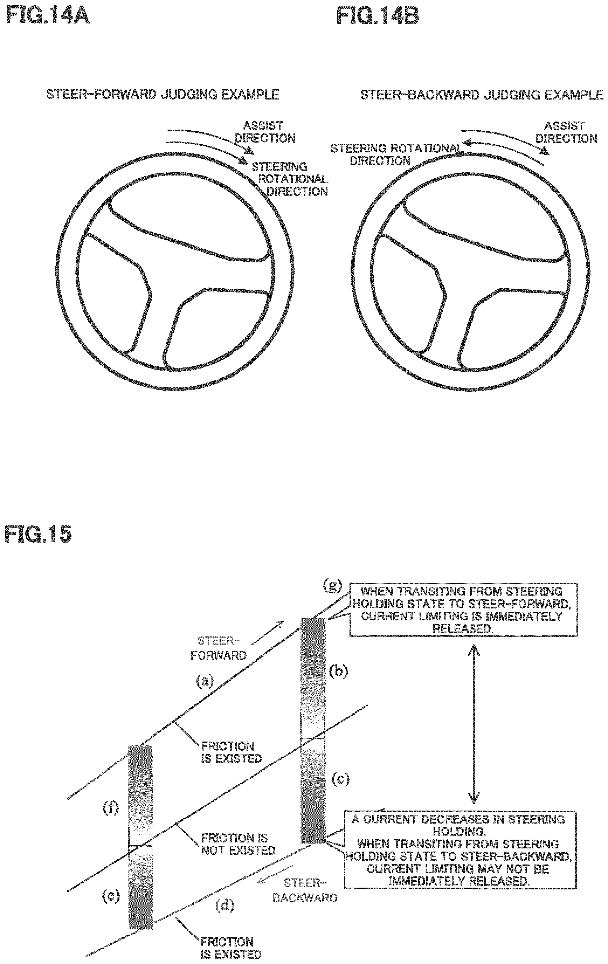

FIG.13A shows a behavior which a steering rotational direction is detected whether the angle signal (the steering angle) is an upper side or a lower side against the hysteresis central value. FIG.13B shows a behavior which a torque direction (the assist direction) is detected from positive and negative signs of the current command value. In the present invention, as shown in FIG.14A and FIG.14B, when the assist direction is coincident with the steering rotational direction, the apparatus judges the steer-forward. When the assist direction is not coincident with the steering rotational direction, the apparatus judges the steer-backward.

The operation of FIG.12 is performed in the process of the column output-side angle signal θr1 as well.

In an example of FIG.13A, a first steering position is a right side from a center. The steering position is changed as follows: "to the left", "passing the center", "further to the left", "return to the right", "passing the center", and "left steering". FIG.13B shows a behavior which the steer-forward or the steer-backward is judged depending on a decrease or an increase of the current.

FIG.15 shows a current limiting method. In the transition from a state (a) to a state (b), the angle and the current are latched when transiting from the steer-forward to the steering holding state, and the above current is set as a reference current value of the current limiting. In the transition from the state (b) to a state (c), the current is gradually changed and is limited, considering the friction of the column shaft, against the latched current in the steering holding state. In the current limiting, by comparing the current command value of the torque control output to the current limiting value, and outputting the minimum value, the current is limited to the minimum current to maintain the steering holding state. In the transition from the state (b) to a state (g), in a case of transiting from the steering holding state to the steer-forward, the current limiting is released, and the current is immediately changed to the torque control output value. In the transition from the state (c) to a state (d), in a case that a difference between the latched angle and a present angle is larger than a predetermined amount, the current limiting is released, and the current is immediately changed to the torque control output value. In a state (e) or a state (f), the current limiting is not performed because the current has already decreased to a current in which the steering holding state is maintained in the transition from the steer-backward to the steering holding state.

In a method for detecting the steering state by using the conventional hysteresis filter with respect to the column input-side angle signal θs1 and the column output-side angle signal θr1 in a sensor system as shown in FIG.9, in order that it is detected that the input signal is stabilized to a constant value which is the hysteresis central value by using a particular hysteresis width, it is necessary to increase the hysteresis width. In this case, in order to immediately detect a transition from the stable state, the hysteresis width is too large. Then, in the second embodiment of the present invention, each of the input angle signals (the column input-side angle signal θs1 and the column output-side angle signal θr1) has plural hysteresis widths "A" (large) and "B" (small). By selecting the hysteresis width "A" or "B" depending on varying the state, the above problem is resolved.

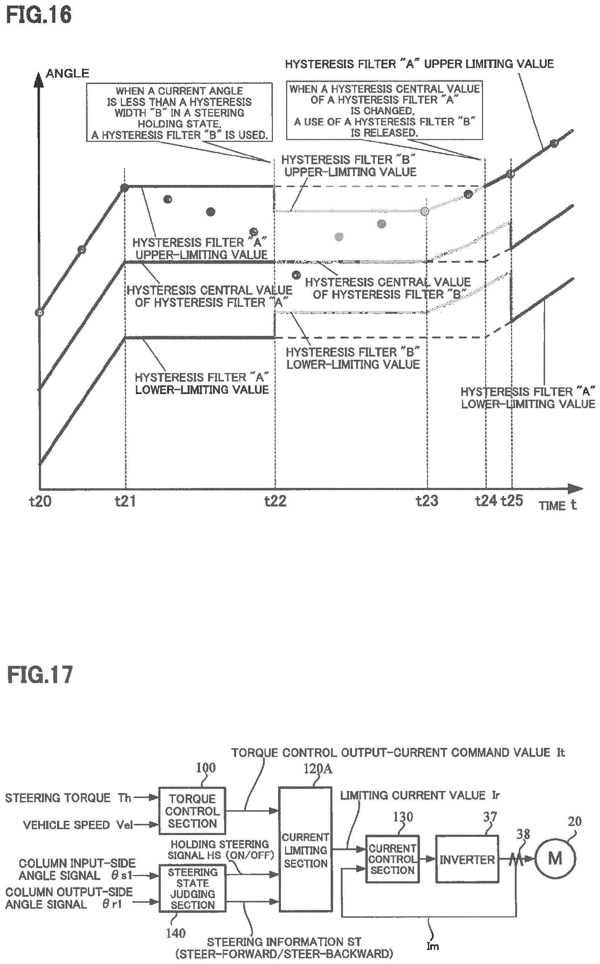

In the second embodiment, as shown in FIG.16, it is difficult to change the hysteresis central value of the hysteresis filter "A" by adopting the large hysteresis width "A" of the hysteresis filter "A" until the input angle signals (the column input-side angle signal θs1 and the column output-side angle signal θr1) are stable to some extent (a time point t21 to a time point t22). After the time point t22, when the input angle signals are more stable, it is formed that the change of the hysteresis central value of the hysteresis filter "A" is easily occurred by adopting the small hysteresis width "B" of the hysteresis filter "B" (the time point t22 to a time point t23). Thereby, it is possible to immediately detect a stability of the input angle signals, and detect the transition from the stable state by a small change. The hysteresis central value of the hysteresis filter "A" is changed at a time point t24, and the transition from the hysteresis width "B" of the hysteresis filter "B" to the hysteresis width "A" of the hysteresis filter "A" is occurred at a time point t25. The symbol "●" of FIG.16 denotes the input angle signals.

When the hysteresis width is narrowed from "A" (large) to "B" (small), it is necessary not to change the hysteresis central value due to a switch. In a case that a value between the input angle signals and the hysteresis central value is within a threshold, the hysteresis width is switched. To widen the hysteresis width from "B" (small) to "A" (large), since the change of the hysteresis central value is not treated by simply switching the hysteresis width, two hysteresis filters for the column input-side angle signal θs1 and the column output-side angle signal θr1 are prepared. In a case that respective hysteresis central values of the hysteresis width "A" and the hysteresis width "B" arc changed, the hysteresis width is switched. In a case that the calculating of the hysteresis width "B" is always performed, the hysteresis central value of the hysteresis filter "A" is different from that of the hysteresis filter "B". In this way, based on the result of the hysteresis filter "A", only when the hysteresis trigger signal is ON, the calculating process and the judging of the hysteresis filter "B" are performed. Thereby, continuing to detect the change of the state, it is possible to switch the hysteresis width.

FIG.17 shows a block diagram of the second embodiment. The steering torque Th and the vehicle speed Vel are inputted into the torque control section 100, and the torque control output-current command value "It", which is calculated based on the steering torque Th and the vehicle speed Vel, is inputted into the current limiting section 120A. The column input-side angle signal θs1 and the column output-side angle signal θr1 which are outputted from the angle sensors which are provided with the column shaft, are inputted into the steering state judging section 140, and the steering holding signal HS (ON or OFF) and the steering information ST (the steer-forward or the steer-backward) which are judged at the steering state judging section 140, are inputted into the current limiting section 120A. The limiting current value Ir from the current limiting section 120A and the motor current value Im are inputted into the current control section 130 and the motor 20 are driving-controlled by the limiting current value Ir and the motor current value Im via the inverter 37.

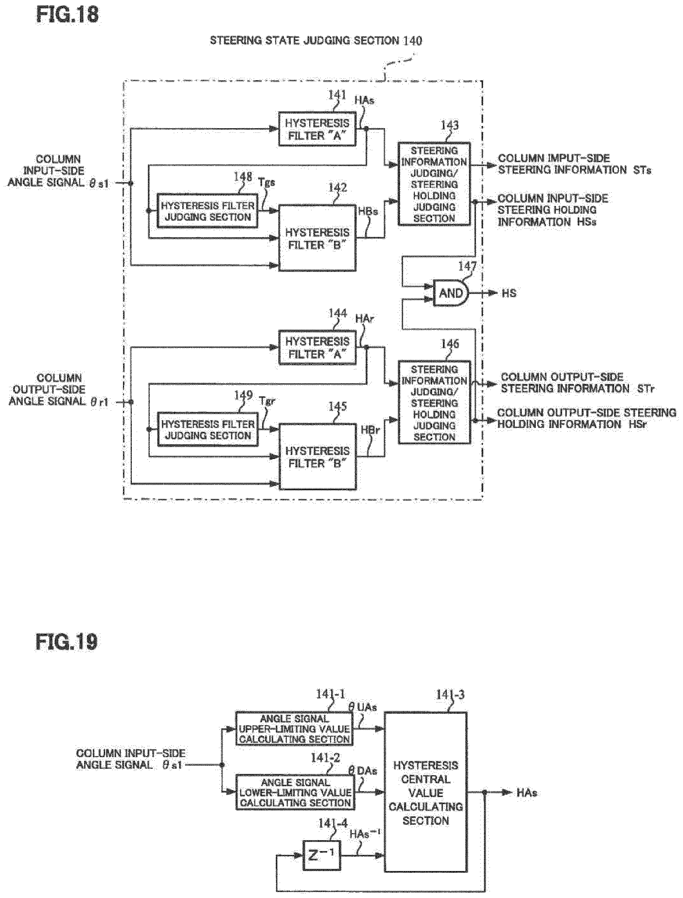

The column input-side angle signal θs1 of the handle side and the column output-side angle signal θr1 of the intermediate shaft side are inputted into the steering state judging section 140, and the steering state judging section 140 has a configuration as shown in FIG.18 and performs the hysteresis filter process, and the steering information judging/steering holding judging. The column input-side angle signal θs1 is inputted into the hysteresis filter (A) 141 and the hysteresis filter (B) 142, and the column output-side angle signal θr1 is inputted into the hysteresis filter (A) 144 and the hysteresis filter (B) 145. A hysteresis (A) central value HAs is outputted from the hysteresis filter 141, and is inputted into the steering information judging/steering holding judging section 143, the hysteresis filter judging section 148 and the hysteresis filter (B) 142. A hysteresis trigger signal Tgs from the hysteresis filter judging section 148 is inputted into the hysteresis filter (B) 142. A hysteresis (A) central value HAr is outputted from the hysteresis filter 144, and is inputted into the steering information judging/steering holding judging section 146, the hysteresis filter judging section 149 and the hysteresis filter (B) 145. A hysteresis trigger signal Tgr from the hysteresis filter judging section 149 is inputted into the hysteresis filter (B) 145.

A hysteresis (B) central value HBs is outputted from the hysteresis filter (B) 142 which operates during the hysteresis trigger signal Tgs is inputted (ON), and is inputted into the steering information judging/steering holding judging section 143. A hysteresis (B) central value HBr is outputted from the hysteresis filter (B) 145 which operates during the hysteresis trigger signal Tgr is inputted (ON), and is inputted into the steering information judging/steering holding judging section 146.

As well, calculating initial input signals of the hysteresis filters (B) 142 and 145 are the hysteresis central values HAs and HAr from the hysteresis filters (A) 141 and 144, respectively.

Column input-side steering information STs and column input-side steering holding information HSs are outputted from the steering information judging/steering holding judging section 143, and column output-side steering information STr and column output-side steering holding information HSr are outputted from the steering information judging/steering holding judging section 146. The column input-side steering holding information HSs and the column output-side steering holding information HSr are inputted into an AND section 147 which judges a logical product condition. When both inputs are coincident, the steering holding signal HS is outputted from the AND section 147. A switching judging section comprises the steering information judging/steering holding judging sections 143 and 146, and the AND section 147.

The hysteresis filters (A) 141 and 144 are the same configuration. The column input-side angle signal θs1 will be described with reference to FIG.19 which illustrates the hysteresis filter 141. The column input-side angle signal θs1 is inputted into an angle signal upper-limiting value calculating section 141-1 and an angle signal lower-limiting value calculating section 141-2. An angle signal upper-limiting value θUAs and an angle signal lower-limiting value θDAs are calculated at the angle signal upper-limiting value calculating section 141-1 and the angle signal lower-limiting value calculating section 141-2, respectively. The angle signal upper-limiting value θUAs and the angle signal lower-limiting value θDAs are inputted into a hysteresis central value calculating section 141-3. A portion of a hysteresis setting section comprises the angle signal upper-limiting value calculating section 141-1 and the angle signal lower-limiting value calculating section 141-2. Based on the angle signal upper-limiting value θUAs and the angle signal lower-limiting value θDAs, a hysteresis central value HAs which is calculated at the hysteresis central value calculating section 141-3, is inputted into the steering information judging/steering holding judging section 143, the hysteresis filter judging section 148 and the hysteresis filter (B) 142, and is latched at a latch section (Z$^{-1}$) 141-4. A past value HAS$^{-1}$, which is latched, is inputted into the hysteresis central value calculating section 141-3. The hysteresis central value HAs is outputted from the hysteresis central value calculating section 141-3. A hysteresis central value operating section comprises the hysteresis central value calculating section 141-3 and the latch section (Z$^{-1}$) 141-4.

The hysteresis filter (A) 144 into which the column output-side angle signal θr1 is inputted, is the same configuration of the hysteresis filter (A) 141.

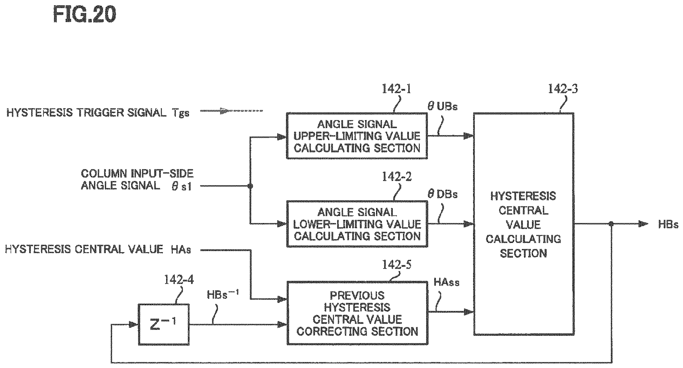

The hysteresis filters (B) 142 and 145 are the same configuration. The column input-side angle signal θs1 will be described with reference to FIG.20 which illustrates the hysteresis filter 142. The hysteresis filter (B) 142 operates only when the hysteresis trigger signal Tgs is inputted (ON) from the hysteresis filter 148. The column input-side angle signal θs1 is inputted into an angle signal upper-limiting value calculating section 142-1 and an angle signal lower-limiting value calculating section 142-2. An angle signal upper-limiting value θUBs and an angle signal lower-limiting value θDBs are calculated at the angle signal upper-limiting value calculating section 142-1 and the angle signal lower-limiting value calculating section 142-2, respectively. The angle signal upper-limiting value θUBs and the angle signal lower-limiting value θDBs are inputted into a hysteresis central value calculating section 142-3. A portion of a hysteresis setting section comprises the angle signal upper-limiting value calculating section 142-1 and the angle signal lower-limiting value calculating section 142-2. Based on the angle signal upper-limiting value θUBs and the angle signal lower-limiting value θDBs, a hysteresis central value HBs which is calculated at the hysteresis central value calculating section 142-3, is inputted into the steering information judging/steering holding judging section 146, and is latched at a latch section ($Z^{-1}$) 142-4. A past value $HBS^{-1}$, which is latched, is inputted into a previous hysteresis central value correction section 142-5. The hysteresis central value HAs is also inputted into the previous hysteresis central value correction section 142-5. The corrected hysteresis central value Hass is inputted into the hysteresis central value calculating section 142-3. The hysteresis central value calculating section 142-3 calculates the hysteresis central value HBs, and the hysteresis central value HBs is inputted into the steering information judging/steering holding judging section 146. A hysteresis central value operating section comprises the hysteresis central value calculating section 142-3, the previous hysteresis central value correction section 142-5 and the latch section ($Z^{-1}$) 142-4.

The hysteresis filter (A) 145 into which the column output-side angle signal θr1 is inputted, is the same configuration of the hysteresis filter (A) 142.

The hysteresis widths are set by considering following conditions (a) and (b). The hysteresis widths have two widths "A" and "B". Under satisfying the following conditions, the large hysteresis width "A" and the small hysteresis width "B" are set.

(a) column input-side angle signal θs1:
a value that is larger than a noise width of the column input-side angle signal θs1 and is smaller than a friction of the column shaft (a sum of a bearing preload of a shaft, a spline engagement section of an inner shaft and an outer shaft and a mechanical gear structure portion of a worm wheel)

(b) column output-side angle signal θr1:
a value that is larger than a noise width of the column output-side angle signal θr1 + a value that is smaller than 0.1[Nm] which a driver does not feel (changing by the spring rate of the torsion bar)

Further, as shown in FIG.17, the torque control output current command value "It", the steering holding signal HS and the steering signal ST from the steering state judging section 110 are inputted into the current limiting section 120A. When the transiting from the steering to the steering holding is judged, the current command value when the transiting is occurred is latched, and the current arc limited. The limited current is inputted into the minimum value selecting section, and is compared to the torque control output current command value "It". The smaller one is selected, and a limiting current value Ir is outputted. When the transiting from the steering holding to a steering state of the steer-forward or the steer-backward is occurred, the current limiting is released, and the torque control output current command value "It" is outputted as the limiting current value Ir.

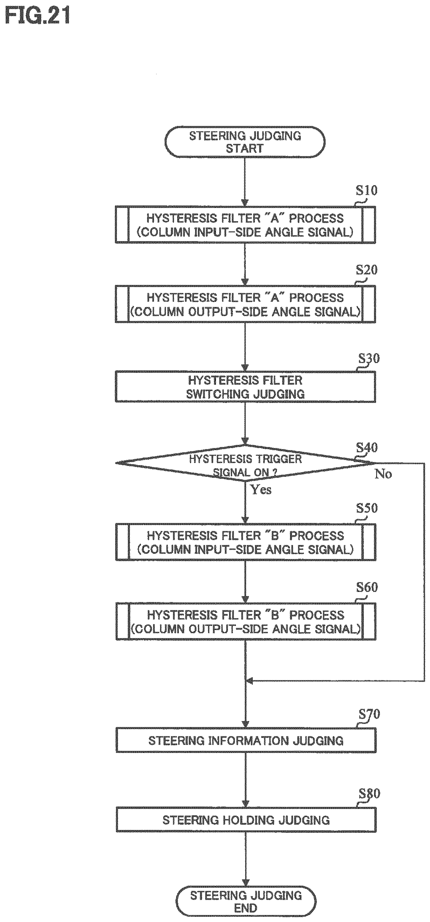

In such a configuration, an operating example of the steering state judging 140 will be described with reference to a flowchart of FIG.21.

At first, the hysteresis filter (A) 141 performs the filter process to the column input-side angle signal θs1 (Step S10). Next, the hysteresis filter (A) 144 performs the filter process to the column output-side angle signal θr1 (Step S20). This order may be changed. Thereafter, the switching judging of the hysteresis filter "A" or "B" is performed (Step S30), and the hysteresis trigger signal Tgs or Tgr from the hysteresis filter judging section 148 or 149 is judged ON or OFF (Step S40). In a case that the hysteresis trigger signal Tgs or Tgr is ON, the hysteresis filter (B) 142 performs the filter process to the column input-side angle signal θs1 (Step S50). Next, the hysteresis filter (B) 145 performs the filter process to the column output-side angle signal θr1 (Step S60). This order may be changed. Then, the process of the steering information judging (Step S70) and the process of the steering holding judging (Step S80) are performed. In a case that the hysteresis trigger signals Tgs and Tgr are OFF, the process of the steering information judging (Step S70) and the process of the steering holding judging (Step S80) are performed, and the steering process ends.

In short, the process of the hysteresis filter "A" performs to the filter process to the column input-side angle signal θs1 and the filter process to the column output-side angle signal θr1. Then, the judging of the hysteresis filter is performed. Based on the judging result, when the filter is switched to the hysteresis filter "B", the process of the hysteresis filter "B" is performed, and the steering holding judging and the steering judging are performed using the hysteresis central values of the hysteresis filter "A" and the hysteresis filter "B".

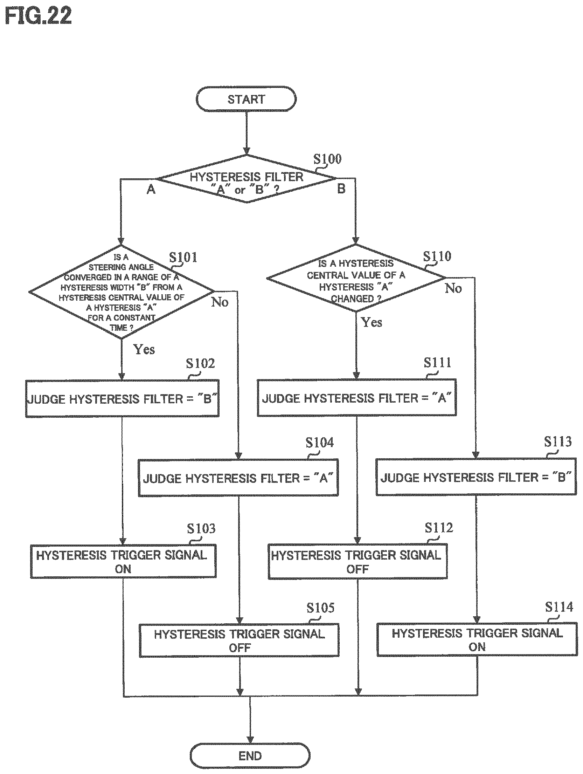

Next, the operations of the hysteresis filter judging sections 148 and 149 will be described with reference to the flowchart of FIG.22. The operation of hysteresis filter judging section 148 is the same as that of the hysteresis filter judging section 149, and then the hysteresis filter judging section 148 will only be described.

At first, it is judged whether the hysteresis filter is "A" (141) or "B" (142) (Step S100). When the hysteresis filter is "A", it is judged whether the steering angle is in a range of the hysteresis width "B" from the hysteresis central value of the hysteresis "A" for a constant time (Step S101). In a case that the steering angle is in a range of the hysteresis width "B" for the constant time, it is judged that the hysteresis filter is "B" (Step S102), the hysteresis trigger signal Tgs is outputted (ON) (Step S103) and the process ends. In a case that the steering angle is not in a range of the hysteresis width "B" for the constant time, it is judged that the hysteresis filter is "A" (Step S104), the hysteresis trigger signal Tgs is OFF (Step S105) and the process ends.

When the hysteresis filter is "B" in judging of the above Step S100, it is judged whether the hysteresis central value of the hysteresis "A" is changed or not (Step S110). In a case that the hysteresis central value is changed, it is judged that the hysteresis filter is "A" (Step S111), the hysteresis trigger signal Tgs is OFF (Step S112) and the process ends. In a case that the hysteresis central value is not changed, it is judged that the hysteresis filter is "B" (Step S113), the hysteresis trigger signal Tgs is outputted (ON) (Step S114) and the process ends.

The operation of the hysteresis filter judging section 149 is also the same as that of the hysteresis filter judging section 148.

The operation of the hysteresis filters (A) 141 and 144 is Steps S111 to S112 and Steps S120 to S124 described in FIG.12. The hysteresis filters (B) 142 and 145 performs the filter process only when the hysteresis trigger signals Tgs and Tgr are inputted (ON) from the hysteresis filter judging sections 148 and 149. Therefore, as shown in FIG.20, the correcting section 142-5 is provided. Only when the transiting from the hysteresis filters "A" to the hysteresis filters "B" is occurred, the operation is performed as follows. The previous hysteresis central value of the hysteresis filters "B" is initialized by the hysteresis central value of the hysteresis filters "A", and the subsequent operation is the same as that of the hysteresis filters "A" 141 and 144.

In the detecting of the steering holding state, the central value of the hysteresis width (the hysteresis central value) is used. The initial value of the hysteresis central value is an average value of the steering angle upper-limiting value and the steering angle lower-limiting value, and the hysteresis central value is updated by the hysteresis filter process. The steering angle upper-limiting value and the steering angle lower-limiting value, which are set by the detected steering angle, are compared to the past value of the hysteresis central value (the previous hysteresis central value), and the update of the hysteresis central value is performed. In a case that the past value of the hysteresis central value (the hysteresis central past value) is larger than the steering angle upper-limiting value, or the hysteresis central past value is the steering angle lower-limiting value or less, the hysteresis central value is updated. In other cases, the hysteresis central value is not updated. When the hysteresis central value is not updated, it is judged that the provisional steering holding state (the provisional steering holding state) is occurred at that point. When all of the judging results (the provisional steering information), which plural steering sensors are detected to the steering angle, are the provisional steering holding state, it is detected that the steering holding state at that point. The detecting result of the steering holding state is utilized to a characteristic improvement of the current command value.

In the present invention, since the hysteresis characteristic is added to the steering angle signal, and the hysteresis width is existed in the detecting process of the steering holding state, the immediate detecting is possible without the filter process or the like even though a noise or the like is generated. Because the detecting process is performed by updating the hysteresis central value and using the plural judging results to the steering angle, few erroneously detecting has occurred, and the accurate detecting is possible.

The relationship of the above logical values "1" and "0" may be constructed by an inverse logical circuit.

In the above embodiments, the calculating process and the control are performed by using two angle informations of the column input-side and the column output-side. It is possible that an estimate value of the column output-side angle which is calculated from the column input-side angle, the steering torque and the spring rate of the torsion bar without providing with the column output-side angle detecting means, is used as an alternative of the column output-side angle. Or on the contrary, the column input-side angle may be estimated from the column output-side angle.

The column output-side angle may be estimated by utilizing a reduction ratio of a column reduction mechanism section from a motor-resolver angle, and the column input-side angle may be estimated from the steering torque and the spring rate of the torsion bar.

Further, for a simple mounting, it is possible that the column input-side angle is only used without utilizing the column output-side angle and the motor-resolver angle, and the calculating process and the control are performed. Or on the contrary, it is possible that the column output-side angle is only used without utilizing the column input-side angle, and the calculating process and the control are performed.

Furthermore, it is possible that using only the motor-resolver angle, which substitutes for the column output-side angle, estimates and is alternative of the column output-side angle from the reduction ratio of the column reduction mechanism section. Or it is possible that using only the motor rotational speed, which substitutes for the motor resolver angle, estimates and is alternative of a motor rotational angle from an integral value of the rotational speed.

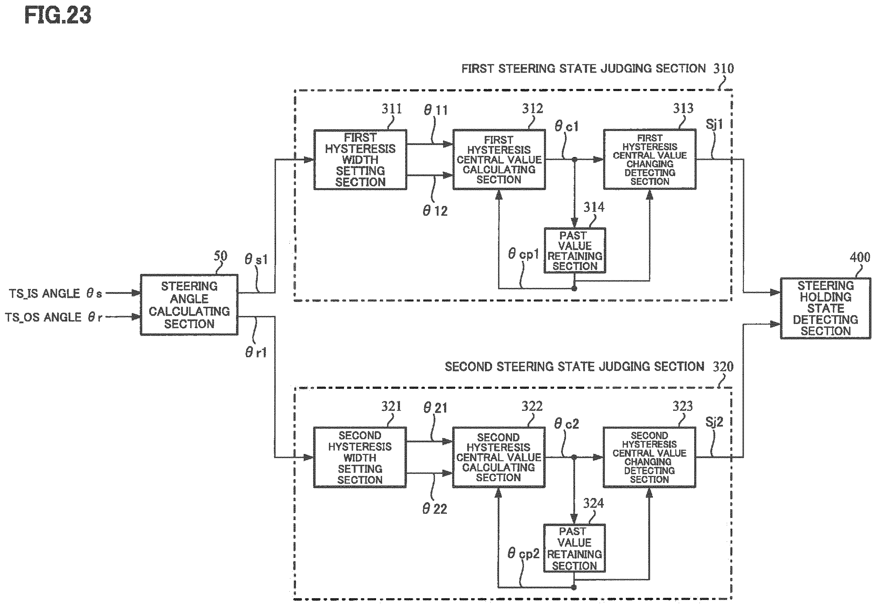

FIG.23 is a block diagram showing a configuration example (the third embodiment) of the steering state judging section which accurately detects the steering holding state. In the third embodiment, since two steering angles are used, the apparatus comprises two steering state judging sections (the first (310) and the second (320)). As the steering angle sensors, the 20° rotor sensor 22 and the 40° rotor sensor 24 in FIG.9 are used.

As described above, a TS_IS angle θs outputted from the 20° rotor sensor 22 and a TS_OS angle θr outputted from the 40° rotor sensor 24 are inputted into the steering angle calculating section 50. The steering angle calculating section 50 calculates absolute angles and outputs the steering angles θs1 and θr1.

A first steering state judging section 310 comprises a first hysteresis width setting section 311, a first hysteresis central value calculating section 312, a first hysteresis central value changing detecting section 313 and a past value retaining section 314. The first hysteresis width setting section 311 adds a predetermined value to the steering angle θs1 or subtracts a predetermined value from the steering angle θs1, and calculates the steering angle upper-limiting value and the steering angle lower-limiting value. The first hysteresis central value calculating section 312 calculates the hysteresis central value from the steering angle upper-limiting value, the steering angle lower-limiting value and a hysteresis central past value which is retained at the past value retaining section 314. The calculated hysteresis central value is inputted into the past value retaining section 314 and the first hysteresis central value changing detecting section 313. The first hysteresis central value changing detecting section 313 compares the inputted hysteresis central value to the hysteresis central past value which is retained at the past value retaining section 314, judges the steering state and outputs provisional steering information. In similar to the first steering state judging section 310, the second steering state judging section 320 comprises a second hysteresis width setting section 321, a second hysteresis central value calculating section 322, a second hysteresis central value changing detecting section 323 and a past value retaining section 324, and performs the similar processes to the steering angle θr1.

The steering holding state detecting section 400 detects the steering holding state based on a provisional steering information which is outputted from the first steering state judging section 310 and the second steering state judging section 320.

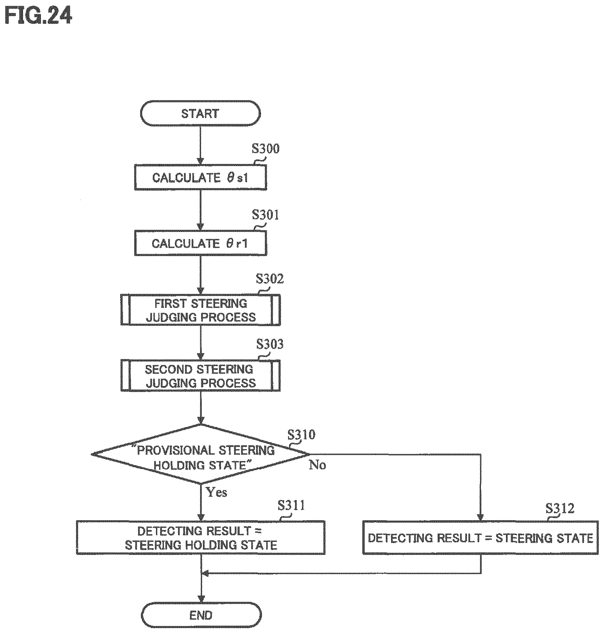

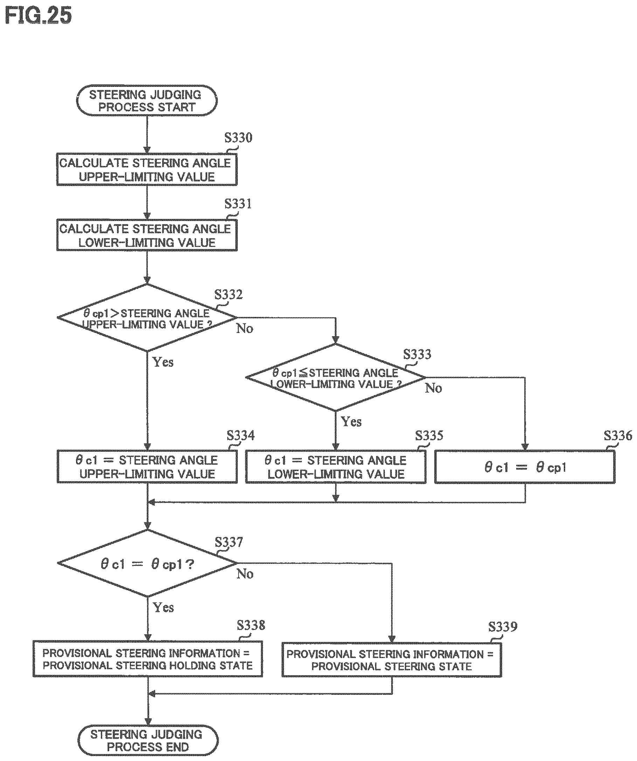

In such a configuration, the operating example will be described with reference to flowcharts of FIG.24 and FIG.25.

The steering angle calculating section 50 calculates the steering angle θs1 (Step S300), outputs the steering angle θs1 to the first hysteresis width setting section 311, calculates the steering angle θr1 (Step S301) and outputs the steering angle θr1 to the second hysteresis width setting section 321. The first steering state judging section 310 performs the first steering judging process using the steering angle θs1 (Step S302).

The first hysteresis width setting section 311 adds a predetermined value R1 (hereinafter referred to as a "first hysteresis width parameter") to the steering angle θs1, and calculates the steering angle upper-limiting value θ11 (= θs1 + R1) (Step S330). The first hysteresis width setting section 311 subtracts the first hysteresis width parameter R1 from the steering angle θs1, and calculates the steering angle lower-limiting value θ12 (= θs1 - R1) (Step S331).

The steering angle upper-limiting value θ11 and the steering angle lower-limiting value θ12 are inputted into the first hysteresis central value calculating section 312. The first hysteresis central value calculating section 312 compares the steering angle upper-limiting value θ11 to the hysteresis central past value θcp1 which is retained at the past value retaining section 314 (Step S332). When "θcp1>θ11", the steering upper-limiting value θ11 is set as the hysteresis central value θc1 (Step S334). When "θcp1 ≤ θ11", the hysteresis central past value θcp1 is compared to the steering angle lower-limiting value θ12 (Step S333). When "θcp1≤θ12", the steering lower-limiting value θ12 is set as the hysteresis central value θc1 (Step S335). When "θcp1>θ12", the hysteresis central past value θcp1 is set as the hysteresis central value θc1 (Step S336).

In a case that the steering angle upper-limiting value θ11 and the steering angle lower-limiting value θ12 arc data calculated from the initial steering angle θs1 which is detected at a time of starting the steering angle detecting, an average value of the steering angle upper-limiting value θ11 and the steering angle lower-limiting value θ12 (=(θ11+θ12)/2) is set as the hysteresis central value θc1. In a case of the third embodiment, since "θ11=θs1+R1" and "θ12=θs1-R1", the initial hysteresis central value θc1 is θs1.

The hysteresis central value θc1 is outputted to the first hysteresis central value changing detecting section 313 and the past value retaining section 314. The first hysteresis central value changing detecting section 313 compares the hysteresis central past value θcp1, which is retained at the past value retaining section 314, to the hysteresis central value θc1 (Step S337). In a case that the hysteresis central value θc1 is equal to the hysteresis central past value θcp1, provisional steering information Sj1 is outputted as "provisional steering holding state" (Step S338). In a case that the hysteresis central value θc1 is not equal to the hysteresis central past value θcp1, the provisional steering information Sj1 is outputted as "provisional steering state" (Step S339).

The second steering state judging section 320 performs the second steering judging process using the steering angle θr1 (Step S303). Since the second steering judging process is almost the same as the first steering judging process, the description is omitted. In calculating the steering angle value θ21 and the steering angle value θ22, a predetermined value R2 (hereinafter referred to as a "second hysteresis width parameter") is used, and the steering angle value θ21 and the steering angle value θ22 calculate as "θ21=θr1+R2" and "θ22=θr1-R2", respectively.

The provisional steering information Sj 1 which is outputted from the first hysteresis central value changing detecting section 313 and the provisional steering information Sj2 which is outputted from the second hysteresis central value changing detecting section 323 are inputted into the steering holding state detecting section 400. The steering holding state detecting section 400 compares the provisional steering information Sj1 to the provisional steering information Sj2 (Step S310). In a case that the provisional steering information Sj1 and Sj2 are "provisional steering holding state", the detecting result is set as "steering holding state" (Step S311). In a case other than the above case, the detecting result is set as "steering state" (Step S312).

An effect of detecting the steering holding state according to the present embodiment is described in comparison with a method for detecting the steering holding state using a conventional fixed threshold. Here, the operation of the first steering state judging section 310 is described. The detecting of the steering holding state is also performed by using the provisional steering information Sj2 which is the judging result of the second steering state judging section 320. Since the effect of the present invention is described in comparison with the conventional method, for the description being prevented from becoming redundant, the description is carried out as the provisional steering information Sj2 is the same as the provisional steering information Sj 1. Then, when the provisional steering information Sj 1 is "provisional steering holding state", the detecting result is set as "steering holding state". When the provisional steering information Sj 1 is "provisional steering state", the detecting result is set as "steering state".

Prior to the description, a comparison of the hysteresis central past value θcp1 and the steering angle upper-limiting value θ11 (Step S332), and a comparison of the hysteresis central past value θcp1 and the steering angle lower-limiting value θ12 (Step S333), which the first hysteresis central value calculating section 312 performs, converts to Equation 1 using θ11 = θs1 + R1 and θ12 = θs1 - R1.

$$[\text{Equation 1}]$$

$$\text{if } \theta s1 < \theta cp1 - R1, \text{ then } \theta c1 = steering\ angle\ upper\text{-}limiting\ value,$$

$$\text{if } \theta cp1 - R1 \leq \theta s1 < \theta cp1 + R1, \text{ then } \theta c1 = \theta cp1,$$

$$\text{if } \theta cp1 + R1 \leq \theta s1, \text{ then } \theta c1 = steering\ angle\ lower\text{-}limiting\ value.$$

That is, in a case that the steering angle θs1 (actual steering angle) outputted from the steering angle calculating section 50 is in a range of "θcp1-R1" (hereinafter referred to as a "past lower-limiting value") to "θcp1+R1" (hereinafter referred to as a "past upper-limiting value"), the hysteresis central value θcp1 is not updated. In a case that the steering angle θs1 is not in a range of "θcp1-R1" to "θcp1+R1", the hysteresis central value θcp1 is updated to the steering angle upper-limiting value or the steering angle lower-limiting value. When the hysteresis central value θcp1 is not updated, the first hysteresis central value changing detecting section 313 judges "provisional steering holding state". When the hysteresis central value θcp1 is updated, the first hysteresis central value changing detecting section 313 judges "provisional steering state". Summarizing the conditions and the results, the overall result is expressed by a following Equation 2.

$$[\text{Equation 2}]$$

$$\text{if actual steering angle} < past\ lower\text{-}limiting\ value,$$

$$\qquad then\ hysteresis\ central\ value = steering\ angle\ upper\text{-}limiting\ value\ in\ \text{``steering state''},$$

$$\text{if past upper-limiting value} \leq actual\ steering\ angle < past\ upper\text{-}limiting\ value,$$

$$\qquad then\ hysteresis\ central\ value\ is\ not\ updated\ in\ \text{``steering holding state''},$$

$$\text{if past lower-limiting value} \leq actual\ steering\ angle,$$

$$\qquad then\ hysteresis\ central\ value = steering\ angle\ lower\text{-}limiting\ value\ in\ \text{``steering state''}.$$

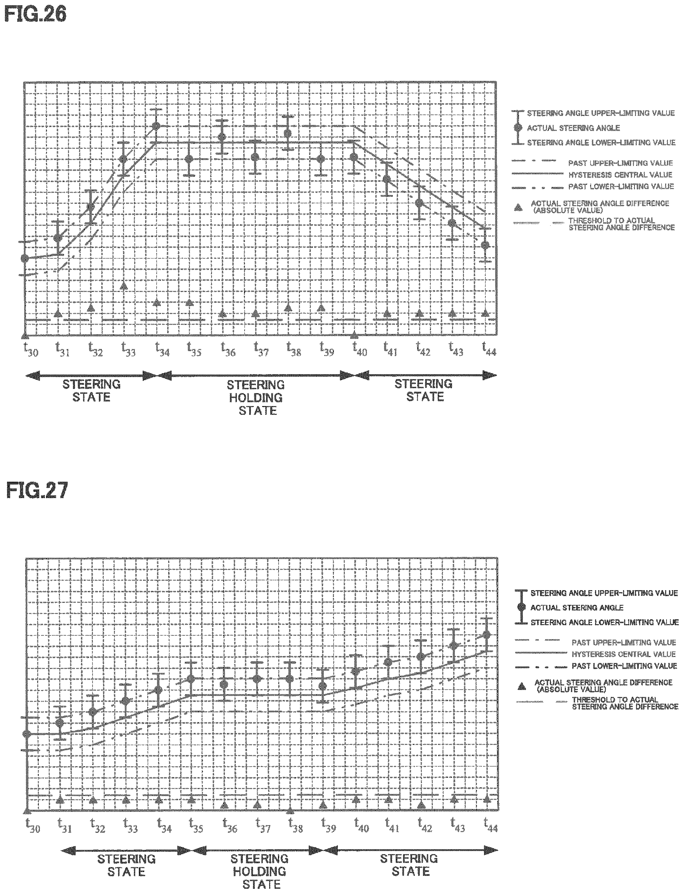

FIG.26 and FIG.27 are diagrams showing an example of changing the actual steering angle, the hysteresis central value and the like. FIG.26 shows the changing in a case of generating a noise in the steering holding. FIG.27 shows the changing in a case of slowly steering.

At first, it is described about FIG.26. In FIG.26, the steering holding is between a time $t_{35}$ and a time $t_{40}$, and the actual steering angle is trembling due to the noise and the like.

At a time point $t_{31}$, the hysteresis central past value is the actual steering angle at a time $t_{30}$, and the past upper-limiting value and the past lower-limiting value arc the steering angle upper-limiting value and the steering angle lower-limiting value at a time point $t_{30}$. Then, since the actual steering angle at a time point $t_{31}$ is larger than the past upper-limiting value, it is "steering state" at the time point $t_{31}$ and the hysteresis central value is updated to the steering angle lower-limiting value at the time point $t_{31}$.

At a time point $t_{32}$, the hysteresis central past value is the steering angle lower-limiting value at the time point $t_{31}$. The past upper-limiting value is a value which adds the first hysteresis width parameter R1 to the hysteresis central past value, and the past lower-limiting value is a value which subtracts the first hysteresis width parameter R1 from the hysteresis central past value. Then, since the actual steering angle at the time point $t_{32}$ is larger than the past upper-limiting value, it is also "steering state" at a time $t_{32}$ and the hysteresis central value is updated to the steering angle lower-limiting value at the time point $t_{32}$.

At time points $t_{33}$ and $t_{34}$, the circumstances are almost the same as the above case, it is also "steering state" and the hysteresis central value is updated to the steering angle lower-limiting value.

At a time point $t_{35}$, the hysteresis central past value is the steering angle lower-limiting value at the time point $t_{34}$. The past upper-limiting value is a value which adds the first hysteresis width parameter R1 to the hysteresis central past value, and the past lower-limiting value is a value which subtracts the first hysteresis width parameter R1 from the hysteresis central past value. Since the actual steering angle at the time point $t_{35}$ is in a range of the past lower-limiting value to the past upper-limiting value, it is "steering holding state" at the time point $t_{35}$ and the hysteresis central value is not updated. The almost same circumstances are continued for a time point $t_{36}$ to a time point $t_{40}$, it is "steering holding state" for these times and the hysteresis central value is not updated.

At a time point $t_{41}$, the hysteresis central past value remains the steering angle lower-limiting value at the time point $t_{34}$. The past upper-limiting value is a value which adds the first hysteresis width parameter R1 to the hysteresis central past value, and the past lower-limiting value is a value which subtracts the first hysteresis width parameter R1 from the hysteresis central past value. Since the actual steering angle at the time point $t_{41}$ is smaller than the past lower-limiting value, it is "steering state" at the time point $t_{41}$ and the hysteresis central value is updated to the steering angle upper-limiting value. After a time point $t_{42}$, because the same circumstances are continued, it is "steering state" and the hysteresis central value is updated to the steering angle upper-limiting value.

In this way, according to the present embodiment, it is judged "steering holding state" from the time point $t_{35}$ to the time point $t_{40}$, it is judged "steering state" for a time other than the time point $t_{35}$ to the time point $t_{40}$ and then it can be accurately detected in the steering holding state. In FIG.26, a solid line, a one-dot chain line, and a two-dot chain line denote a line connecting the hysteresis central value, a line connecting the past upper-limiting value, and a line connecting the past lower-limiting value for respective times, respectively. Seeing this figure, it is understood that the hysteresis central value and the like follow the actual angle without affected by a trembling of the actual steering angle.

On the other hand, in a method for detecting the steering holding state using a fixed threshold, it cannot be accurately detected in the steering holding. For example, in a case that the threshold is set to a difference of the actual steering angle (the absolute value), the threshold is set as values which are denoted by a broken line of FIG.26 in order that the state at a time $t_{31}$ is judged "steering state". Since the trembling is occurred in the actual steering angle of the steering holding due to the noise or the like, it is erroneously judged that the state for the time point $t_{35}$ to the time point $t_{39}$ is judged "steering state". When the threshold is set a larger value for being judged "steering holding state" for the time point $t_{35}$ to the time point $t_{39}$, it is erroneously judged that the state which is in the steering state except for a time $t_{33}$ is "steering holding state". When the noise or the like is removed by using a low pass filter in order to resolve these erroneously judging, a delay is occurred in this process and then it takes a time to detect the steering holding state.

Next, FIG.27 will be described. In FIG.27, it is in the steering holding from the time point $t_{36}$ to the time point $t_{39}$, and it is slowly steering for a time other than the time point $t_{36}$ to the time point $t_{39}$.

At a time $t_3$, the hysteresis central past value is the actual angle at a time $t_{30}$. The past upper-limiting value and the past lower-limiting value at a time $t_{31}$ are the steering angle upper-limiting value and the steering angle lower-limiting value at the time point $t_{30}$. Since the actual steering angle at the time point $t_{31}$ is between the past lower-limiting value and the past upper-limiting value, it is "steering holding state" at a time $t_{31}$ and the hysteresis central value is not updated.

At the time point $t_{32}$, the hysteresis central past value remains the steering angle lower-limiting value at the time point $t_{30}$. The past upper-limiting value is a value which adds the first hysteresis width parameter R1 to the hysteresis central past value, and the past lower-limiting value is a value which subtracts the first hysteresis width parameter R1 from the hysteresis central past value. Since the actual steering angle at the time point $t_{32}$ is larger than the past upper-limiting value, it is "steering state" at a time $t_{32}$ and the hysteresis central value is updated to the steering angle lower-limiting value at the time point $t_{32}$. The almost same circumstances are continued for the time point $t_{33}$ to the time point $t_{35}$, it is "steering state" for these times and the hysteresis central value is updated to the steering angle lower-limiting value.

At the time point $t_{36}$, the hysteresis central past value is the steering angle lower-limiting value at the time point $t_{35}$. The past upper-limiting value is a value which adds the first hysteresis width parameter R1 to the hysteresis central past value, and the past lower-limiting value is a value which subtracts the first hysteresis width parameter R1 from the hysteresis central past value. Since the actual steering angle at a time point $t_{36}$ is between the past lower-limiting value and the past upper-limiting value, it is "steering holding state" at a time $t_{36}$, and the hysteresis central value is not updated. The almost same circumstances are continued for a time point $t_{37}$ to a time point $t_{39}$, it is "steering holding state" for this duration and the hysteresis central value is not updated.

At the time point $t_{40}$, the hysteresis central past value remains the steering angle lower-limiting value at the

time point $t_{35}$. The past upper-limiting value is a value which adds the first hysteresis width parameter R1 to the hysteresis central past value, and the past lower-limiting value is a value which subtracts the first hysteresis width parameter R1 from the hysteresis central past value. Since the actual steering angle at the time point $t_{40}$ is larger than the past upper-limiting value, it is "steering state" at a time $t_{40}$ and the hysteresis central value is updated to the steering angle lower-limiting value. After a time $t_{41}$, because the same circumstances are continued, it is "steering state" and the hysteresis central value is updated to the steering angle lower-limiting value.

In this way, according to the present invention, it is judged "steering holding state" from the time point $t_{36}$ to the time point $t_{39}$, and then it can be accurately judged "steering state" for a time other than the time point $t_{36}$ to the time point $t_{39}$. In FIG.27 as well as FIG.26, the solid line, the one-dot chain line, and the two-dot chain line denote a line connecting the hysteresis central value, a line connecting the past upper-limiting value, and a line connecting the past lower-limiting value for respective times, respectively. It is understood that the hysteresis central value and the like follow in response to changing the actual steering angle.

On the other hand, in a method for detecting the steering holding state using a fixed threshold, it cannot be accurately detected in the steering holding. In a case that the threshold is set to a difference of the actual steering angle (absolute value), as well as in a case of FIG.26, when the threshold is set as values which are denoted by a broken line of FIG.27 in order that the state for the time point $t_{36}$ to the time point $t_{39}$ is judged "steering holding state", it is erroneously judged that the states for the time point $t_{31}$ to the time point $t_{35}$ and after the time point $t_{40}$ are judged "steering holding state".

In the third embodiment, the apparatus comprises two steering state judging sections. The two steering state judging sections can be combined to one steering state judging section and the one steering state judging section may perform the process to the steering angles $\theta s1$ and $\theta r1$. The steering angles which are used for detecting the steering holding state may increase. Further, although the same predetermined value is used in calculating of the steering angle upper-limiting value and the steering angle lower-limiting value, different predetermined values may be used. The first hysteresis width parameter R1 may be the same as the second hysteresis width parameter R2. In a case that the hysteresis central value is the same as the hysteresis central past value, the provisional steering information is set as "provisional steering holding state". Even in a case that a difference between the hysteresis central value and the hysteresis central past value is slight, the provisional steering information may be set as "provisional steering holding state".

Explanation of Reference Numerals

| | |
|---|---|
| 1 | handle (steering wheel) |
| 2 | column shaft (steering shaft, handle shaft) |
| 10 | torque sensor |
| 14 | steering angle sensor |
| 20 | motor |
| 21 | Hall IC sensor |
| 22 | 20° rotor sensor |
| 24 | 40° rotor sensor |
| 30 | control unit (ECU) |
| 31 | current command value calculating section |
| 33, 120, 120A | current limiting section |
| 50 | steering angle calculating section |
| 100 | torque control section |
| 100A | sign judging section |
| 110, 140 | steering state judging section |
| 130 | current control section |
| 143, 146 | steering information judging/steering holding judging section |
| 310, 320 | steering state judging section |
| 311, 321 | hysteresis width setting section |
| 312, 322 | hysteresis central value calculating section |
| 313, 323 | hysteresis central value changing detecting section |
| 400 | steering holding state detecting section |

**Claims**

1. A steering holding judging apparatus for a vehicle, comprising:

a column input-side steering angle sensor (22) to detect a column input-side steering angle signal of a handle side of a column shaft provided in a steering system of said vehicle;
a column output-side steering angle sensor (24) to detect a column output-side steering angle signal of an intermediate shaft side of said column shaft;
a torque control section (100) to calculate a torque control output current command value based on a steering toque and a vehicle speed of said vehicle;
a sign judging section (100A) to output an assist direction by judging a sign of said torque control output current command value; and
a steering state judging section (110) to calculate hysteresis central values by comparing said column input-side steering angle signal and said column output-side steering angle signal with respective hysteresis signals that indicate an angle signal upper-limiting value and an angle signal lower-limiting value, which have respective hysteresis widths for said column input-side steering angle signal and said column output-side steering angle signal, judge a steering state by using said hysteresis central values, and output a steering holding signal and a steering information of steer-forward/steer-backward,
wherein a first value which is larger than a noise width of said column input-side steering angle signal and is a smaller than 0.2 [deg] is set as said hysteresis width for said column input-side steering angle signal, and said hysteresis signal for said column input-side steering angle signal, which is set by added or being subtracted said first value to or from said column input-side steering angle signal detected from said column input-side steering angle sensor (22), is outputted,
wherein a second value which is larger than a noise width of the column output-side angle signal and is smaller than a friction of said column shaft is set as said hysteresis width for said column output-side steering angle signal, and said hysteresis signal for said column output-side steering angle signal, which is set by added or being subtracted said second value to or from said column output-side steering angle signal detected from said column output-side steering angle sensor (24), is outputted, wherein said steering state judging section (110) comprises:

a first upper-limiting value and lower-limiting value calculating section (111s, 112s) to calculate a first upper-limiting value and a first lower-limiting value of said column input-side steering angle signal;
a first hysteresis central value calculating section (113s) to calculate a first hysteresis central value for a first hysteresis width based on said first upper-limiting value, said first lower-limiting value and a first past value;
a first judging section (115s) to output a first steering holding signal and a first steering information based on a change of said first hysteresis central value and said assist direction;
a second upper-limiting value and lower-limiting value calculating section (111r, 112r) to calculate a second upper-limiting value and a second lower-limiting value of said column output-side steering angle signal;
a second hysteresis central value calculating section (113r) to calculate a second hysteresis central value for a second hysteresis width based on said second upper-limiting value, said second lower-limiting value and a second past value;
a second judging section (115r) to output a second steering holding signal and a second steering information based on a change of said second hysteresis central value and said assist direction; and
a logic section (116,117) that comprises a first logical circuit (116) to input said first steering holding signal and said second steering holding signal and a second logical circuit (117) to input said first steering information and said second steering information,
wherein said logic section (116,117) outputs said steering holding signal when said first steering holding signal and said second steering holding signal are judged as a steering holding state at same time, and outputs said steering information of steer-forward when said first steering information and said second steering information are judged as a steer-forward state at the same time; and
wherein said first logical circuit (116) is a logical product circuit (116) and said second logical circuit (117) is a logical sum circuit (117).

2. An electric power steering apparatus equipped with said steering holding judging apparatus for said vehicle according to Claim 1, wherein said electric power steering apparatus includes a current limiting section (120) to limit a current of said steering system based on said torque control output current command value, a judged result of said steering state judging section (110), said column input-side steering angle signal and said column output-side steering angle signal, and assist-controls said steering system.

3. A steering holding judging apparatus for a vehicle, comprising:

a column input-side steering angle sensor (22) to detect a column input-side steering angle signal of a handle side of a column shaft provided in a steering system of said vehicle;
a column output-side steering angle sensor (24) to detect a column output-side steering angle signal of an intermediate shaft side of said column shaft; and
a steering state judging section (140) to judge a steering state by inputting said column input-side steering angle signal and said column output-side steering angle signal, and to output a steering holding signal and a steering information of steer-forward/steer-backward,
wherein said steering state judging section (140) comprises:

a first hysteresis width setting section (141-1,141-2,142-1,142-2) to calculate and set a first upper hysteresis width and a first lower hysteresis width, by inputting said column input-side steering angle signal and being added or being subtracted a first value which is larger than a noise width of said column input-side steering angle signal and is a smaller than a friction of said column shaft, to or from said column input-side steering angle signal detected from said column input-side steering angle sensor (22);
a hysteresis central value calculating section (141-3,141-4,142-3) to calculate a first hysteresis central value of said first upper hysteresis width and a second hysteresis central value of said first lower hysteresis width;
a first hysteresis filter judging section (148) to turn-ON/OFF a first hysteresis trigger signal based on said first hysteresis central value;
a first steering information judging/steering holding judging section (143) to output a column input-side steering information and a column input-side steering holding information based on said first hysteresis central value when said first hysteresis trigger signal is OFF and said first and second hysteresis central values when said first hysteresis trigger signal is ON;
a second hysteresis width setting section (144,145) to calculate and set a second upper hysteresis width and a second lower hysteresis width, by inputting said column output-side steering angle signal and being added or being subtracted a second value which is added a value which is lower than 0.1[Nm] to a value which is larger than a noise width of said column output-side steering angle signal, to or from said column output-side steering angle signal detected from said column output-side steering angle sensor (24);
a hysteresis central value calculating section (corresponding to 141-3,141-4,142-3) to calculate a third hysteresis central value of said second upper hysteresis width and a fourth hysteresis central value of said second lower hysteresis width;
a second hysteresis filter judging section (149) to turn-ON/OFF a second hysteresis trigger signal based on said third hysteresis central value;
a second steering information judging/steering holding judging section (146) to output a column output-side steering information and a column output-side steering holding information based on said third hysteresis central value when said second hysteresis trigger signal is OFF and said third and fourth hysteresis central values when said second hysteresis trigger signal is ON; and
a logic section which comprises a first logical circuit (147) to input said column input-side steering holding signal and said column output-side steering holding signal and a second logical circuit to input said column input-side steering information and said column output-side steering information, outputs said steering holding signal when said column input-side steering holding signal and said column output-side steering holding signal are judged as a steering holding state at same time, and outputs said steering information of steer-forward when said column input-side steering information and said column output-side steering information are judged as a steer-forward state at same time,
wherein said first lower hysteresis width is set to be smaller than said first upper hysteresis width, and said second lower hysteresis width is set to be smaller than said second upper hysteresis width; and
wherein said first logical circuit (147) is a logical product circuit (147) and said second logical circuit is a logical sum circuit.

4. The steering holding judging apparatus for the vehicle according to Claim 3, wherein said first hysteresis filter judging section (148), in a case that said first upper hysteresis width is set, turns-ON said first hysteresis trigger signal when said column input-side angle signal is, during a constant time, in a range of said first lower hysteresis width from said first hysteresis central value, and in a case that said first lower hysteresis width is set, turns-OFF said first hysteresis trigger signal when said first hysteresis central value is changed, and turns-ON said first hysteresis trigger signal when said first hysteresis central value is not changed, and wherein said second hysteresis filter judging section (149), in a case that said second upper hysteresis width is set, turns-ON said second hysteresis trigger signal when said column output-side angle signal is, during a constant time, in a range of said second lower hysteresis width from said third hysteresis central value, and in a case that said second lower hysteresis width is set, turns-OFF said second hysteresis trigger signal when said second hysteresis central value is changed, and turns-ON said second hysteresis trigger signal when said second hysteresis central value is not changed.

5. The steering holding judging apparatus for the vehicle according to any of the preceding Claim 3 or 4, wherein a previous hysteresis central value to said first lower hysteresis width is initialized with said first hysteresis central value only when it is transited from said first upper hysteresis width to said first lower hysteresis width, and wherein a previous hysteresis central value to said second lower hysteresis width is initialized with said third hysteresis central value only when it is transited from said second upper hysteresis width to said second lower hysteresis width.

6. An electric power steering apparatus equipped with said steering holding judging apparatus for said vehicle according to any one of Claims 3 - 5 , wherein said electric power steering apparatus includes a current limiting section (120A) to limit a current of said steering system based on a torque control output current command value from a torque control section (100) in said steering system and a judged result of said steering state judging section (140), and performs an assist-control based on a limited current value limited at said current limiting section (120A).

7. An electric power steering apparatus that calculates a torque control output current command value based on at least steering torque, and assist-controls a steering system having a column shaft by driving a motor based on said torque control output current command value, **characterized in that** said electric power steering apparatus comprising:

angle detecting means (22,24,50) to output a column input-side angle signal and a column output-side angle signal of said steering system;
a steering state judging section (110) to judge a steering state based on said column input-side angle signal and said column output-side angle signal, and output a steering holding signal and a steering information; and
a current limiting section (120) to limit said torque control output current command value based on said column input-side angle signal, said column output-side angle signal, said steering holding signal and said steering information of steer-forward/steer-backward,
wherein for said column input-side angle signal and said column output-side angle signal, said steering state judging section (110) comprises:

setting sections (111s,112s,111r,112r) to set respective hysteresis widths for said column input-side steering angle signal and said column output-side steering angle signal and output respective hysteresis signals that indicate an angle signal upper-limiting value and an angle signal lower-limiting value;
calculating sections (113s,114s,113r,114r) to calculate hysteresis central values by comparing said column input-side steering angle signal and said column output-side steering angle signal with said respective hysteresis signals; and
judging sections (115s,115r,116,117) to judge a steering state of a steering holding and a steer-forward or a steer-backward based on a change of said hysteresis central value and an assist direction,
wherein said hysteresis width of said column input-side steering angle signal is set by being added or being subtracted a first value which is larger than a noise width of said column input-side steering angle signal and is a smaller than 0.2[deg], to or from said column input-side steering angle signal detected from said column input-side steering angle sensor (22),
wherein said hysteresis width of said column output-side steering angle signal is set by being added or being subtracted a second value which is larger than a noise width of the column output-side angle signal and is smaller than a friction of said column shaft, to or from said column output-side steering angle signal detected from said column output-side steering angle sensor (24), and
wherein said current limiting section (120) performs a current limiting of said torque control output current command value in a range of a current which a steering holding state is maintained.

8. The electric power steering apparatus according to Claim 7,

wherein said steering state judging section (110) outputs said steering holding signal as a steering holding state when said steering holdings are judged at same time at respective judging sections (115s,115r,116,117) for said column input-side angle signal and said column output-side angle signal,
wherein said judging sections (115s,115r,116,117) comprise:

steering judging sections (115s,115r) which are provided for said column input-side angle signal and said column output-side angle signal and output a column input-side steering holding signal and a column input-side steering information, and a column output-side steering holding signal and a column output-side steering information based on said hysteresis central value and said assist direction; and

a logical circuit (116,117) to output said steering holding signal and said steering information by a logical calculating of said column input-side steering holding signal and said column output-side steering holding signal, and said column input-side steering information and said column output-side steering information.

**9.** The electric power steering apparatus according to Claim 8,

wherein in said steering holding state, said electric power steering apparatus latches said torque control output current command value,

performs said current limiting by gradually changing a current command value, which is considered in a friction of a column shaft, based on a latched torque control output current control value,

in said current limiting, compares said torque control output current control value to said current limiting value, limits to a minimum current to maintain said steering holding state by outputting a minimum one,

in a case of transiting from said steering holding state to said steer-forward, releases said current limiting, and immediately changes to said torque control output current control value.

**10.** The electric power steering apparatus according to any one of Claims 7 - 9 wherein said current limiting section (120) comprises:

a latch section (122) to latch said torque control output current command value, said column input-side angle signal and said column output-side angle signal just before transiting from a steer-forward to said steering holding state;

a limiting judging section (121) to input said column input-side angle signal, said column output-side angle signal, a latched column input-side angle signal, a latched column output-side angle signal and said steering holding signal, and output a judging signal;

a limiting section (123) to input a latched torque control output current command value and said judging signal, and output a limiting current; and

a minimum value selecting section (124) to input aid torque control output current command value and said limiting current, and output a minimum value as a limiting current value.

**11.** The electric power steering apparatus according to Claim 10, wherein when said steering holding signal is a steering holding state, a difference between said latched column input-side angle signal and said latched column output-side angle signal is a predetermined amount or less and a difference between said latched column output-side angle signal and said present column output-side angle signal is a predetermined amount or less, said limiting judging section (121) judges that said current limiting is capable.

**Patentansprüche**

**1.** Eine Vorrichtung zur Beurteilung des Lenkeinschlags für ein Fahrzeug, aufweisend:

einen säuleneingangsseitigen Lenkwinkelsensor (22) zum Erfassen eines säuleneingangsseitigen Lenkwinkelsignals einer Lenkradseite einer in einem Lenksystem des Fahrzeugs vorgesehenen Säulenwelle;

einen säulenausgangsseitigen Lenkwinkelsensor (24), zum Erfassen eines säulenausgangsseitigen Lenkwinkelsignals einer Zwischenwellenseite der Säulenwelle;

einen Drehmomentsteuerungsabschnitt (100), zum Berechnen eines Drehmomentsteuerungs-Ausgabestrom-Sollwertes auf der Grundlage eines Lenkdrehmoments und einer Fahrzeuggeschwindigkeit des Fahrzeugs;

einen Vorzeichenbeurteilungsabschnitt (100A) zum Ausgeben einer Assistenzrichtung durch Beurteilen eines Vorzeichens des Drehmomentsteuerungs-Ausgabestrom-Sollwertes; und

einen Lenkzustandsbeurteilungsabschnitt (110) zum Berechnen von Hysterese-Mittelwerten durch Vergleichen des säuleneingangsseitigen Lenkwinkelsignals und des säulenausgangsseitigen Lenkwinkelsignals mit jeweiligen Hysteresesignalen, die einen oberen Grenzwert des Winkelsignals und einen unteren Grenzwert des Winkelsignals anzeigen, und die jeweilige Hysteresebreiten für das säuleneingangsseitige Lenkwinkelsignal und das säulenausgangsseitige Lenkwinkelsignal aufweisen, zum Beurteilen eines Lenkzustands unter Verwendung der Hysterese-Mittelwerte und zum Ausgeben eines Lenkhaltesignals und einer Lenkinformation bezüglich einer Vorwärtssteuerung/Rückwärtssteuerung,

wobei ein erster Wert, der größer als eine Rauschbandbreite des säuleneingangsseitigen Lenkwinkelsignals und kleiner als 0,2 [grad] ist, als Hysteresebreite für das säuleneingangsseitige Lenkwinkelsignal eingestellt wird, und das Hysteresesignal für das säuleneingangsseitige Lenkwinkelsignal, das durch Addieren oder Subtrahieren des ersten Wertes zu oder von dem von dem säuleneingangsseitigen Lenkwinkelsensor (22) erfassten säuleneingangsseitigen Lenkwinkelsignal eingestellt wird, ausgegeben wird,

wobei ein zweiter Wert, der größer als eine Rauschbandbreite des säulenausgangsseitigen Winkelsignals und kleiner als eine Reibung der Säulenwelle ist, als Hysteresebreite für das säulenausgangsseitige Lenkwinkelsignal eingestellt wird, und das Hysteresesignal für das säulenausgangsseitige Lenkwinkelsignal, das durch Addieren oder Subtrahieren des zweiten Wertes zu oder von dem von dem säulenausgangsseitigen Lenkwinkelsensor (24) erfassten säulenausgangsseitigen Lenkwinkelsignal eingestellt wird, ausgegeben wird, wobei der Lenkzustandsbeurteilungsabschnitt (110) aufweist:

einen ersten Berechnungsabschnitt (111s, 112s) für einen oberen Grenzwert und einen unteren Grenzwert, um einen ersten oberen Grenzwert und einen ersten unteren Grenzwert des eingangsseitigen Lenkwinkelsignals der Säule zu berechnen;

einen ersten Hysterese-Mittelwert-Berechnungsabschnitt (113s), um einen ersten Hysterese-Mittelwert für eine erste Hysteresebreite auf der Grundlage des ersten oberen Grenzwerts, des ersten unteren Grenzwerts und eines ersten früheren Werts zu berechnen;

einen ersten Beurteilungsabschnitt (115s) zum Ausgeben eines ersten Lenkhaltesignals und einer ersten Lenkinformation auf der Grundlage einer Änderung des ersten Hysterese-Mittelwerts und der Assistenzrichtung;

einen zweiten Berechnungsabschnitt (111r, 112r) für einen oberen Grenzwert und einen unteren Grenzwert, um einen zweiten oberen Grenzwert und einen zweiten unteren Grenzwert des ausgangsseitigen Lenkwinkelsignals der Säule zu berechnen;

einen zweiten Hysterese-Mittelwert-Berechnungsabschnitt (113r), um einen zweiten Hysterese-Mittelwert für eine zweite Hysteresebreite auf der Grundlage des zweiten oberen Grenzwerts, des zweiten unteren Grenzwerts und eines zweiten früheren Werts zu berechnen;

einen zweiten Beurteilungsabschnitt (115r) zum Ausgeben eines zweiten Lenkhaltesignals und einer zweiten Lenkinformation auf der Grundlage einer Änderung des zweiten Hysterese-Mittelwerts und der Assistenzrichtung; und

einen Logikabschnitt (116, 117), der eine erste logische Schaltung (116) zur Eingabe des ersten Lenkhaltesignals und des zweiten Lenkhaltesignals und eine zweite logische Schaltung (117) zur Eingabe der ersten Lenkinformation und der zweiten Lenkinformation umfasst,

wobei der Logikabschnitt (116, 117) das Lenkhaltesignal ausgibt, wenn das erste Lenkhaltesignal und das zweite Lenkhaltesignal zur gleichen Zeit als ein Zustand des gehaltenen Lenkeinschlags beurteilt werden, und als Lenkinformation die Vorwärtssteuerung ausgibt, wenn die erste Lenkinformation und die zweite Lenkinformation zur gleichen Zeit als ein Zustand der Vorwärtssteuerung beurteilt werden; und

wobei die erste logische Schaltung (116) eine logische Produktschaltung (116) und die zweite logische Schaltung (117) eine logische Summenschaltung (117) darstellt.

2. Eine elektrische Servolenkungsvorrichtung, die mit der Vorrichtung zur Beurteilung des Lenkeinschlags für das Fahrzeug nach Anspruch 1 ausgestattet ist, wobei die elektrische Servolenkungsvorrichtung einen Strombegrenzungsabschnitt (120) aufweist, um einen Strom des Lenksystems auf der Grundlage des Drehmomentsteuerungs-Ausgabestrom-Sollwertes, eines Beurteilungsergebnisses des Lenkzustandsbeurteilungsabschnittes (110), des säuleneingangsseitigen Lenkwinkelsignals und des säulenausgangsseitigen Lenkwinkelsignals zu begrenzen, und die das Lenksystem assistierend steuert.

3. Eine Vorrichtung zur Beurteilung des Lenkeinschlags eines Fahrzeugs, aufweisend:

einen säuleneingangsseitigen Lenkwinkelsensor (22) zum Erfassen eines säuleneingangsseitigen Lenkwinkelsignals von einer Lenkradseite einer in einem Lenksystem des Fahrzeugs vorgesehenen Säulenwelle;

einen säulenausgangsseitigen Lenkwinkelsensor (24) zum Erfassen eines säulenausgangsseitigen Lenkwinkelsignals von einer Zwischenwellenseite der Säulenwelle; und

einen Lenkzustandsbeurteilungsabschnitt (140) zum Beurteilen eines Lenkzustands durch Eingeben des säuleneingangsseitigen Lenkwinkelsignals und des säulenausgangsseitigen Lenkwinkelsignals und zum Ausgeben eines Lenkhaltesignals und einer Lenkinformation bezüglich einer Vorwärtssteuerung/Rückwärtssteuerung, wobei der Lenkzustandsbeurteilungsabschnitt (140) aufweist:

einen ersten Hysteresebreiten-Einstellabschnitt (141-1, 141-2, 142-1, 142-2) zum Berechnen und Einstellen einer ersten oberen Hysteresebreite und einer ersten unteren Hysteresebreite durch Eingeben des säuleneingangsseitigen Lenkwinkelsignals und Addieren oder Subtrahieren eines ersten Wertes, der größer als eine Rauschbandbreite des säuleneingangsseitigen Lenkwinkelsignals und kleiner als eine Reibung der Säulenwelle ist, zu oder von dem säuleneingangsseitigen Lenkwinkelsignal, das von dem säuleneingangsseitigen Lenkwinkelsensor (22) erfasst wird;

einen Hysterese-Mittelwert-Berechnungsabschnitt (141-3, 141-4, 142-3), um einen ersten Hysterese-Mittelwert der ersten oberen Hysteresebreite und einen zweiten Hysterese-Mittelwert der ersten unteren Hysteresebreite zu berechnen;

einen ersten Hysteresefilter-Beurteilungsabschnitt (148), um ein erstes Hysterese-Triggersignal auf der Grundlage des ersten Hysterese-Mittelwerts EIN/AUS zu schalten;

einen ersten Lenkinformations-Beurteilungsabschnitt (143) zum Ausgeben einer säuleneingangsseitigen Lenkinformation und einer säuleneingangsseitigen Lenkhalteinformation auf der Grundlage des ersten Hysterese-Mittelwerts, wenn das erste Hysterese-Triggersignal AUS ist, und des ersten und zweiten Hysterese-Mittelwerts, wenn das erste Hysterese-Triggersignal EIN ist;

einen zweiten Hysteresebreiten-Einstellabschnitt (144, 145) zum Berechnen und Einstellen einer zweiten oberen Hysteresebreite und einer zweiten unteren Hysteresebreite durch Eingeben des säulenausgangsseitigen Lenkwinkelsignals und Addieren oder Subtrahieren eines zweiten Wertes, der einen Wert, der kleiner als 0,1 [Nm] ist, zu einem Wert addiert, der größer als eine Rauschbandbreite des säulenausgangsseitigen Lenkwinkelsignals ist, zu oder von dem säulenausgangsseitigen Lenkwinkelsignal, das von dem säulenausgangsseitigen Lenkwinkelsensor (24) erfasst wird;

einen Hysterese-Mittelwert-Berechnungsabschnitt (entsprechend 141-3, 141-4, 142-3), um einen dritten Hysterese-Mittelwert der zweiten oberen Hysteresebreite und einen vierten Hysterese-Mittelwert der zweiten unteren Hysteresebreite zu berechnen;

einen zweiten Hysteresefilter-Beurteilungsabschnitt (149), um, auf der Grundlage des dritten Hysterese-Mittelwertes, ein zweites Hysterese-Triggersignal EIN/AUS zu schalten;

einen zweiten Lenkinformations-Beurteilungsabschnitt (146) zum Ausgeben einer säulenausgangsseitigen Lenkinformation und einer säulenausgangsseitigen Lenkhalteinformation auf der Grundlage des dritten Hysterese-Mittelwertes, wenn das zweite Hysterese-Triggersignal AUS ist, und des dritten und vierten Hysterese-Mittelwertes, wenn das zweite Hysterese-Triggersignal EIN ist; und

einen Logikabschnitt, der eine erste logische Schaltung (147) aufweist, zum Eingeben des säuleneingangsseitigen Lenkhaltesignals und des säulenausgangsseitigen Lenkhaltesignals sowie eine zweite logische Schaltung, zum Eingeben der säuleneingangsseitigen Lenkinformation und der säulenausgangsseitigen Lenkinformation, und der das Lenkhaltesignal ausgibt, wenn das säuleneingangsseitige Lenkhaltesignal und das säulenausgangsseitige Lenkhaltesignal gleichzeitig als ein Zustand des gehaltenen Lenkeinschlags beurteilt werden, und der als Lenkinformation die Vorwärtssteuerung ausgibt, wenn die säuleneingangsseitige Lenkinformation und die säulenausgangsseitige Lenkinformation zur gleichen Zeit als eine Vorwärtssteuerung beurteilt werden,

wobei die erste untere Hysteresebreite so eingestellt ist, dass sie kleiner ist als die erste obere Hysteresebreite, und die zweite untere Hysteresebreite so eingestellt ist, dass sie kleiner ist als die zweite obere Hysteresebreite; und

wobei die erste logische Schaltung (147) eine logische Produktschaltung (147) und die zweite logische Schaltung eine logische Summenschaltung darstellt.

4. Die Vorrichtung zur Beurteilung des Lenkeinschlags für das Fahrzeug nach Anspruch 3,

wobei der erste Hysteresefilter-Beurteilungsabschnitt (148) in einem Fall, in dem die erste obere Hysteresebreite eingestellt ist, das erste Hysterese-Triggersignal EIN-schaltet, wenn das säuleneingangsseitige Winkelsignal während einer konstanten Zeit in einem Bereich der ersten unteren Hysteresebreite von dem ersten Hysterese-Mittelwert liegt, und in einem Fall, in dem die erste untere Hysteresebreite eingestellt ist, das erste Hysterese-Triggersignal AUS-schaltet, wenn der erste Hysterese-Mittelwert geändert wird, und das erste Hysterese-Triggersignal EIN-schaltet, wenn der erste Hysterese-Mittelwert nicht geändert wird, und

wobei der zweite Hysteresefilter-Beurteilungsabschnitt (149) in einem Fall, in dem die zweite obere Hysteresebreite eingestellt ist, das zweite Hysterese-Triggersignal EIN-schaltet, wenn das säulenausgangsseitige Winkelsignal während einer konstanten Zeit in einem Bereich der zweiten unteren Hysteresebreite von dem dritten Hysterese-Mittelwert liegt, und in einem Fall, in dem die zweite untere Hysteresebreite eingestellt ist, das zweite Hysterese-Triggersignal AUS-schaltet, wenn der zweite Hysterese-Mittelwert geändert wird, und das zweite Hysterese-Triggersignal EIN-schaltet, wenn der zweite Hysterese-Mittelwert nicht geändert wird.

**5.** Die Vorrichtung zur Beurteilung des Lenkeinschlags für das Fahrzeug nach einem der vorherigen Ansprüche 3 oder 4,

wobei ein vorheriger Hysterese-Mittelwert für die erste untere Hysteresebreite nur dann mit dem ersten Hysterese-Mittelwert initialisiert wird, wenn er von der ersten oberen Hysteresebreite zu der ersten unteren Hysteresebreite übergeht, und

wobei ein vorheriger Hysterese-Mittelwert der zweiten unteren Hysteresebreite nur dann mit dem dritten Hysterese-Mittelwert initialisiert wird, wenn er von der zweiten oberen Hysteresebreite zur zweiten unteren Hysteresebreite übergeht.

**6.** Eine elektrische Servolenkungsvorrichtung, die mit der Vorrichtung zur Beurteilung des Lenkeinschlags für das Fahrzeug nach einem der Ansprüche 3 bis 5 ausgestattet ist, wobei die elektrische Servolenkungsvorrichtung einen Strombegrenzungsabschnitt (120A) aufweist, um einen Strom des Lenksystems auf der Grundlage eines Drehmomentsteuerungs-Ausgabestrom-Sollwertes von einem Drehmomentsteuerungsabschnitt (100) in dem Lenksystem und eines Beurteilungsergebnisses des Lenkzustandsbeurteilungsabschnitts (140) zu begrenzen, und auf der Grundlage eines von dem Strombegrenzungsabschnitt (120A) begrenzten Stromwertes, eine Assistenzsteuerung durchführt.

**7.** Eine elektrische Servolenkungsvorrichtung, die einen Drehmomentsteuerungs-Ausgabestrom-Sollwert auf der Grundlage zumindest des Lenkdrehmoments berechnet und ein Lenksystem mit einer Säulenwelle mittels Motorantrieb auf der Grundlage des Drehmomentsteuerungs-Ausgabestrom-Sollwertes assistierend steuert, **dadurch gekennzeichnet, dass** die elektrische Servolenkungsvorrichtung aufweist:

Winkelerfassungsmittel (22, 24, 50) zur Ausgabe eines säuleneingangsseitigen Winkelsignals und eines säulenausgangsseitigen Winkelsignals des Lenksystems;

einen Lenkzustandsbeurteilungsabschnitt (110) zum Beurteilen eines Lenkzustands auf der Grundlage des säuleneingangsseitigen Winkelsignals und des säulenausgangsseitigen Winkelsignals, und zum Ausgeben eines Lenkhaltesignals und einer Lenkinformation; und

einen Strombegrenzungsabschnitt (120) zum Begrenzen des Drehmomentsteuerungs-Ausgabestrom-Sollwerts auf der Grundlage des säuleneingangsseitigen Winkelsignals, des säulenausgangsseitigen Winkelsignals, des Lenkhaltesignals und der Lenkinformation bezüglich einer Vorwärtssteuerung/Rückwärtssteuerung, wobei für das säuleneingangsseitige Winkelsignal und das säulenausgangsseitige Winkelsignal der Lenkzustandsbeurteilungsabschnitt (110) aufweist:

Einstellabschnitte (111s, 112s, 111r, 112r) zum Einstellen jeweiliger Hysteresebreiten für das säuleneingangsseitige Lenkwinkelsignal und das säulenausgangsseitige Lenkwinkelsignal und zum Ausgeben jeweiliger Hysteresesignale, die einen oberen Grenzwert des Winkelsignals und einen unteren Grenzwert des Winkelsignals angeben;

Berechnungsabschnitte (113s, 114s, 113r, 114r) zum Berechnen von Hysterese-Mittelwerten durch Vergleichen des säuleneingangsseitigen Lenkwinkelsignals und des säulenausgangsseitigen Lenkwinkelsignals mit den jeweiligen Hysteresesignalen; und

Beurteilungsabschnitte (115s, 115r, 116, 117) zum Beurteilen eines Lenkzustands hinsichtlich eines Zustands eines gehaltenen Lenkeinschlags und einer

Vorwärtssteuerung/Rückwärtssteuerung auf der Grundlage einer Änderung des Hysterese-Mittelwertes und einer Assistenzrichtung,

wobei die Hysteresebreite des säuleneingangsseitigen Lenkwinkelsignals eingestellt wird, indem ein erster Wert, der größer als eine Rauschbandbreite des säuleneingangsseitigen Lenkwinkelsignals und kleiner als 0,2 [Grad] ist, zu dem von dem säuleneingangsseitigen Lenkwinkelsensor (22) erfassten säuleneingangsseitigen Lenkwinkelsignal addiert oder von diesem subtrahiert wird,

wobei die Hysteresebreite des säulenausgangsseitigen Lenkwinkelsignals eingestellt wird, indem ein zweiter Wert, der größer als eine Rauschbandbreite des säulenausgangsseitigen Winkelsignals und kleiner als eine Reibung der Säulenwelle ist, zu dem von dem säulenausgangsseitigen Lenkwinkelsensor (24) erfassten säulenausgangsseitigen Lenkwinkelsignal addiert oder von diesem subtrahiert wird, und

wobei der Strombegrenzungsabschnitt (120) eine Strombegrenzung des Drehmomentsteuerungs-Ausgabestrom-Sollwerts in einem Strombereich durchführt, in dem ein Zustand des gehaltenen Lenkeinschlags aufrechterhalten wird.

8. Die elektrische Servolenkungsvorrichtung nach Anspruch 7,

wobei der Lenkzustandsbeurteilungsabschnitt (110) das Lenkhaltesignal als einen Zustand des gehaltenen Lenkeinschlags ausgibt, wenn der gehaltene Lenkeinschlag zur gleichen Zeit an jeweiligen Beurteilungsabschnitten (115s, 115r, 116, 117) für das säuleneingangsseitige Winkelsignal und das säulenausgangsseitige Winkelsignal beurteilt wird,
wobei die Beurteilungsabschnitte (115s, 115r, 116, 117) aufweisen:

Lenkbeurteilungsabschnitte (115s, 115r), die für das säuleneingangsseitige Winkelsignal und das säulenausgangsseitige Winkelsignal vorgesehen sind und ein säuleneingangsseitiges Lenkhaltesignal und eine säuleneingangsseitige Lenkinformation und ein säulenausgangsseitiges Lenkhaltesignal und eine säulenausgangsseitige Lenkinformation auf der Grundlage des Hysterese-Mittelwerts und der Assistenzrichtung ausgeben; und
eine logische Schaltung (116, 117) zum Ausgeben des Lenkhaltesignals und der Lenkinformation durch eine logische Berechnung des säuleneingangsseitigen Lenkhaltesignals und des säulenausgangsseitigen Lenkhaltesignals sowie der säuleneingangsseitigen Lenkinformation und der säulenausgangsseitigen Lenkinformation.

9. Die elektrische Servolenkungsvorrichtung nach Anspruch 8,

wobei die elektrische Servolenkungsvorrichtung in dem Zustand des gehaltenen Lenkeinschlags den Drehmomentsteuerungs-Ausgabestrom-Sollwert verriegelt,
die Strombegrenzung durch allmähliches Ändern eines Stromsollwertes, auf Grundlage eines verriegelten Drehmomentsteuerungs-Ausgabestrom-Steuerungswertes unter Berücksichtigung einer Reibung einer Säulenwelle, durchführt,
bei der Strombegrenzung den Drehmomentsteuerungs-Ausgabestrom-Steuerungswert mit dem Strombegrenzungswert vergleicht,
den Strom auf ein Minimum begrenzt, um den Zustand des gehaltenen Lenkeinschlags durch Ausgabe eines Mindeststroms aufrechtzuerhalten,
in einem Fall des Übergangs von dem Zustand des gehaltenen Lenkeinschlags in den Zustand der Vorwärtssteuerung die Strombegrenzung freigibt, und
sofort zu dem Drehmomentsteuerungs-Ausgabestrom-Steuerungswert wechselt.

10. Die elektrische Servolenkungsvorrichtung nach einem der Ansprüche 7 bis 9,
wobei der Strombegrenzungsabschnitt (120) aufweist:

einen Verriegelungsabschnitt (122) zum Verriegeln des Drehmomentsteuerungs-Ausgabestrom-Sollwerts, des säuleneingangsseitigen Winkelsignals und des säulenausgangsseitigen Winkelsignals unmittelbar vor dem Übergang von einem Zustand der Vorwärtssteuerung in den Zustand des gehaltenen Lenkeinschlags;
einen Begrenzungsbeurteilungsabschnitt (121) zum Eingeben des säuleneingangsseitigen Winkelsignals, des säulenausgangsseitigen Winkelsignals, eines verriegelten säuleneingangsseitigen Winkelsignals, eines verriegelten säulenausgangsseitigen Winkelsignals und des Lenkhaltesignals, und zum Ausgeben eines Beurteilungssignals;
einen Begrenzungsabschnitt (123) zum Eingeben eines verriegelten Drehmomentsteuerungs-Ausgabestrom-Sollwertes und des Beurteilungssignals, und zum Ausgeben eines Begrenzungsstroms; und
einen Minimalwert-Auswahlabschnitt (124) zum Eingeben des Drehmomentsteuerungs-Ausgabestrom-Sollwertes und des Begrenzungsstroms, und zum Ausgeben eines Minimalwertes als Begrenzungsstromwert.

11. Die elektrische Servolenkungsvorrichtung nach Anspruch 10,
wobei, wenn das Lenkhaltesignal einen Zustand des gehaltenen Lenkeinschlags anzeigt, eine Differenz zwischen dem verriegelten säuleneingangsseitigen Winkelsignal und dem verriegelten säulenausgangsseitigen Winkelsignal einen vorbestimmten Betrag oder weniger darstellt, und eine Differenz zwischen dem verriegelten säulenausgangsseitigen Winkelsignal und dem aktuellen säulenausgangsseitigen Winkelsignal einen vorbestimmten Betrag oder weniger darstellt, der Begrenzungsbeurteilungsabschnitt (121) feststellt, dass die Strombegrenzung möglich ist.

**Revendications**

1. Dispositif de détermination de maintien de direction destiné à un véhicule, comprenant :

un capteur d'angle de direction du côté d'entrée de colonne (22) destiné à détecter un signal d'angle de direction du côté d'entrée de colonne d'un côté de volant d'un arbre de colonne agencé sur un dispositif de direction dudit véhicule ;
un capteur d'angle de direction du côté de sortie de colonne (24) destiné à détecter un signal d'angle de direction du côté de sortie de colonne d'un côté d'arbre intermédiaire dudit arbre de colonne ;
une section de commande de couple (100) destinée à calculer une valeur de consigne de courant de sortie de commande de couple sur la base d'un couple de direction et d'une vitesse de véhicule dudit véhicule ;
une section de détermination de signe (100A) destinée à délivrer une direction d'assistance en déterminant un signe de ladite valeur de consigne de courant de sortie de commande de couple ; et
une section de détermination d'état de direction (110) destinée à calculer des valeurs centrales d'hystérésis en comparant ledit signal d'angle de direction du côté d'entrée de colonne et ledit signal d'angle de direction du côté de sortie de colonne avec des signaux d'hystérésis respectifs qui indiquent une valeur de limitation supérieure de signal d'angle et une valeur de limitation inférieure de signal d'angle, qui présentent des largeurs d'hystérésis respectives pour ledit signal d'angle de direction du côté d'entrée de colonne et ledit signal d'angle de direction du côté de sortie de colonne, détermine un état de direction en utilisant lesdites valeurs centrales d'hystérésis, et délivre un signal de maintien de direction et des informations de direction parmi marche avant/marche arrière,
dans lequel une première valeur qui est supérieure à une largeur de bruit dudit signal d'angle de direction du côté d'entrée de colonne et inférieure à 0,2 [degré] est définie comme ladite largeur d'hystérésis pour ledit signal d'angle de direction du côté d'entrée de colonne, et ledit signal d'hystérésis pour ledit signal d'angle de direction du côté d'entrée de colonne, qui est défini en ajoutant ou en soustrayant ladite première valeur audit ou dudit signal d'angle de direction du côté d'entrée de colonne détecté à partir dudit capteur d'angle de direction du côté d'entrée de colonne (22), est délivré,
dans lequel une seconde valeur qui est supérieure à une largeur de bruit du signal d'angle du côté de sortie de colonne et inférieure à un frottement dudit arbre de colonne est définie comme ladite largeur d'hystérésis pour ledit signal d'angle de direction du côté de sortie de colonne, et ledit signal d'hystérésis pour ledit signal d'angle de direction du côté de sortie de colonne, qui est défini en ajoutant ou en soustrayant ladite seconde valeur audit ou dudit signal d'angle de direction du côté de sortie de colonne détecté à partir dudit capteur d'angle de direction du côté de sortie de colonne (24), est délivré, dans lequel ladite section de détermination d'état de direction (110) comprend :

une première section de calcul de valeur de limitation supérieure et de valeur de limitation inférieure (111s, 112s) destinée à calculer une première valeur de limitation supérieure et une première valeur de limitation inférieure dudit signal d'angle de direction du côté d'entrée de colonne ;
une première section de calcul de valeur centrale d'hystérésis (113s) destinée à calculer une première valeur centrale d'hystérésis pour une première largeur d'hystérésis sur la base de ladite première valeur de limitation supérieure, ladite première valeur de limitation inférieure et d'une première valeur antérieure ;
une première section de détermination (115s) destinée à délivrer un premier signal de maintien de direction et des premières informations de direction sur la base d'une variation de ladite première valeur centrale d'hystérésis et de ladite direction d'assistance ;
une seconde section de calcul de valeur de limitation supérieure et de valeur de limitation inférieure (111r, 112r) destinée à calculer une seconde valeur de limitation supérieure et une seconde valeur de limitation inférieure dudit signal d'angle de direction du côté de sortie de colonne ;
une seconde section de calcul de valeur centrale d'hystérésis (113r) destinée à calculer une deuxième valeur centrale d'hystérésis pour une seconde largeur d'hystérésis sur la base de ladite seconde valeur de limitation supérieure, ladite seconde valeur de limitation inférieure et d'une seconde la valeur antérieure ;
une seconde section de détermination (115r) destinée à délivrer un second signal de maintien de direction et des secondes informations de direction sur la base d'une variation de ladite deuxième valeur centrale d'hystérésis et de ladite direction d'assistance ; et
une section logique (116, 117) qui comprend un premier circuit logique (116) destiné à entrer ledit premier signal de maintien de direction et ledit second signal de maintien de direction et un second circuit logique (117) destiné à entrer lesdites premières informations de direction et lesdites secondes informations de direction,
dans lequel ladite section logique (116, 117) délivre ledit signal de maintien de direction lorsqu'il est déterminé que ledit premier signal de maintien de direction et ledit second signal de maintien de direction sont dans un état de maintien de direction au même instant, et délivre lesdites informations de direction de marche avant lorsqu'il est déterminé que lesdites premières informations de direction et lesdites secondes informations de direction sont dans un état de marche avant au même instant ; et dans lequel ledit premier circuit logique (116) est un circuit de produit logique (116) et ledit second circuit logique (117) est un circuit de somme logique (117).

2. Dispositif de direction assistée électrique équipé dudit dispositif de détermination de maintien de direction pour ledit véhicule selon la revendication 1, dans lequel ledit dispositif de direction assistée électrique comporte une section de limitation de courant (120) destinée à limiter un courant dudit dispositif de direction sur la base de ladite valeur de consigne de courant de sortie de commande de couple, d'un résultat de détermination de ladite section de détermination d'état de direction (110), dudit signal d'angle de direction du côté d'entrée de colonne et dudit signal d'angle de direction du côté de sortie de colonne, et commande l'assistance dudit dispositif de direction.

3. Dispositif de détermination de maintien de direction destiné à un véhicule, comprenant :

un capteur d'angle de direction du côté d'entrée de colonne (22) destiné à détecter un signal d'angle de direction du côté d'entrée de colonne d'un côté de volant d'un arbre de colonne agencé sur un dispositif de direction dudit véhicule ;
un capteur d'angle de direction du côté de sortie de colonne (24) destiné à détecter un signal d'angle de direction du côté de sortie de colonne d'un côté d'arbre intermédiaire dudit arbre de colonne ; et
une section de détermination d'état de direction (140) destinée à déterminer un état de direction en entrant ledit signal d'angle de direction du côté d'entrée de colonne et ledit signal d'angle de direction du côté de sortie de colonne, et à délivrer un signal de maintien de direction et des informations de direction parmi marche avant/marche arrière,
dans lequel ladite section de détermination d'état de direction (140) comprend :

une première section de définition de largeur d'hystérésis (141-1, 141-2, 142-1, 142-2) destinée à calculer et à définir une première largeur d'hystérésis supérieure et une première largeur d'hystérésis inférieure, en entrant ledit signal d'angle de direction du côté d'entrée de colonne auquel en ajoutant ou en soustrayant une première valeur qui est supérieure à une largeur de bruit dudit signal d'angle de direction du côté d'entrée de colonne et est inférieure à un frottement dudit arbre de direction, audit ou dudit signal d'angle de direction du côté d'entrée de colonne détecté à partir dudit capteur d'angle de direction du côté d'entrée de colonne (22) ;
une section de calcul de valeur centrale d'hystérésis (141-3, 141-4, 142-3) destinée à calculer une première valeur centrale d'hystérésis de ladite première largeur d'hystérésis supérieure et une deuxième valeur centrale d'hystérésis de ladite première largeur d'hystérésis inférieure ;
une première section de détermination de filtre d'hystérésis (148) destinée à activer/désactiver un premier signal de déclenchement d'hystérésis sur la base de ladite première valeur centrale d'hystérésis ;
une première section de détermination d'informations de direction/détermination de maintien de direction (143) destinée à délivrer des informations de direction du côté d'entrée de colonne et des informations de maintien de direction du côté d'entrée de colonne sur la base de ladite première valeur centrale d'hystérésis lorsque ledit premier signal de déclenchement d'hystérésis est désactivé, et desdites première et seconde valeurs centrales d'hystérésis lorsque ledit premier signal de déclenchement d'hystérésis est activé ;
une seconde section de définition de largeur d'hystérésis (144, 145) destinée à calculer et à définir une seconde largeur d'hystérésis supérieure et une seconde largeur d'hystérésis inférieure, en entrant ledit signal d'angle de direction du côté de sortie de colonne et en ajoutant ou en soustrayant une seconde valeur à laquelle est ajoutée une valeur qui est inférieure à 0,1 [Nm] à une valeur qui est supérieure à une largeur de bruit dudit signal d'angle de direction du côté de sortie de colonne, audit ou dudit signal d'angle de direction du côté de sortie de colonne détecté à partir dudit capteur d'angle de direction du côté de sortie de colonne (24) ;
une section de calcul de valeur centrale d'hystérésis (correspondant à 141-3, 141-4, 142-3) destinée à calculer une troisième valeur centrale d'hystérésis de ladite seconde largeur d'hystérésis supérieure et une quatrième valeur centrale d'hystérésis de ladite seconde largeur d'hystérésis inférieure ;
une seconde section de détermination de filtre d'hystérésis (149) destinée à activer/désactiver un second signal de déclenchement d'hystérésis sur la base de ladite troisième valeur centrale d'hystérésis ;
une seconde section de détermination d'informations de direction/détermination de maintien de direction (146) destinée à délivrer des informations de direction du côté de sortie de colonne et des informations de maintien de direction du côté de sortie de colonne sur la base de ladite troisième valeur centrale d'hystérésis lorsque ledit second signal de déclenchement d'hystérésis est désactivé et desdites troisième et quatrième valeurs centrales d'hystérésis lorsque ledit second signal de déclenchement d'hystérésis est activé ; et une section logique qui comprend un premier circuit logique (147) destiné à entrer ledit signal de maintien de direction du côté d'entrée de colonne et ledit signal de maintien de direction du côté de sortie de colonne et un second circuit logique destiné à entrer lesdites informations de direction du côté d'entrée de colonne et lesdites informations de direction du côté de sortie de colonne, à délivrer ledit signal de maintien de direction lorsqu'il est déterminé que ledit signal de maintien de direction du côté d'entrée de colonne et ledit signal de maintien de direction du côté de sortie de colonne sont dans un état de maintien de direction de manière simultanée, et à délivrer lesdites informations de direction de marche avant lorsqu'il est déterminé que lesdites informations de direction du côté d'entrée de colonne et lesdites informations de direction du côté de sortie de colonne sont dans un état de marche avant de manière simultanée,

dans lequel ladite première largeur d'hystérésis inférieure est définie de manière à être inférieure à ladite première largeur d'hystérésis supérieure, et ladite seconde largeur d'hystérésis inférieure est définie de manière à être inférieure à ladite seconde largeur d'hystérésis supérieure ; et

dans lequel ledit premier circuit logique (147) est un circuit de produit logique (147) et ledit second circuit logique est un circuit d'addition logique.

4. Dispositif de détermination de maintien de direction destiné à un véhicule selon la revendication 3,

dans lequel ladite première section de détermination de filtre d'hystérésis (148), dans un cas dans lequel ladite première largeur d'hystérésis supérieure est définie, active ledit premier signal de déclenchement d'hystérésis lorsque ledit signal d'angle du côté d'entrée de colonne est, au cours d'une période constante, compris dans une plage de ladite première largeur d'hystérésis inférieure à partir de ladite première valeur centrale d'hystérésis, et dans un cas dans lequel ladite première largeur d'hystérésis inférieure est définie, désactive ledit premier signal de déclenchement d'hystérésis lorsque ladite première valeur centrale d'hystérésis est modifiée, et active ledit premier signal de déclenchement d'hystérésis lorsque ladite la première valeur centrale d'hystérésis n'est pas modifiée, et

dans lequel ladite seconde section de détermination de filtre d'hystérésis (149), dans un cas dans lequel ladite seconde largeur d'hystérésis supérieure est définie, active ledit second signal de déclenchement d'hystérésis lorsque ledit signal d'angle du côté de sortie de colonne est, au cours d'une période constante, compris dans une plage de ladite seconde largeur d'hystérésis inférieure à partir de ladite troisième valeur centrale d'hystérésis, et dans un cas dans lequel ladite seconde largeur d'hystérésis inférieure est définie, désactive ledit second signal de déclenchement d'hystérésis lorsque ladite deuxième valeur centrale d'hystérésis est modifiée, et active ledit second signal de déclenchement d'hystérésis lorsque ladite deuxième valeur centrale d'hystérésis n'est pas modifiée.

5. Dispositif de détermination de maintien de direction destiné à un véhicule selon l'une quelconque des revendications 3 ou 4 précédentes,

dans lequel une valeur centrale d'hystérésis antérieure à ladite première largeur d'hystérésis inférieure est initialisée à ladite première valeur centrale d'hystérésis uniquement lorsqu'elle transite à partir de ladite première largeur d'hystérésis supérieure vers ladite première largeur d'hystérésis inférieure, et

dans lequel une valeur centrale d'hystérésis antérieure à ladite seconde largeur d'hystérésis inférieure est initialisée à ladite troisième valeur centrale d'hystérésis uniquement lorsqu'elle transite à partir de ladite seconde largeur d'hystérésis supérieure vers ladite seconde largeur d'hystérésis inférieure.

6. Dispositif de direction assistée électrique équipé dudit dispositif de détermination de maintien de direction destiné audit véhicule selon l'une quelconque des revendications 3 à 5, dans lequel ledit dispositif de direction assistée électrique comporte une section de limitation de courant (120A) destinée à limiter un courant dudit dispositif de direction sur la base d'une valeur de consigne de courant de sortie de commande de couple à partir d'une section de commande de couple (100) dans ledit dispositif de direction et d'un résultat de détermination de ladite section de détermination d'état de direction (140), et réalise une commande d'assistance sur la base d'une valeur de courant limitée, limitée au niveau de ladite section de limitation de courant (120A).

7. Dispositif de direction assistée électrique qui calcule une valeur de consigne de courant de sortie de commande de couple sur la base d'au moins un couple de direction, et commande l'assistance d'un dispositif de direction comportant un arbre de colonne en entraînant un moteur sur la base de ladite valeur de consigne de courant de sortie de

EP 3 254 932 B1

commande de couple,
**caractérisé en ce que** ledit dispositif de direction assistée électrique comprend :

un moyen de détection d'angle (22, 24, 50) destiné à délivrer un signal d'angle du côté d'entrée de colonne et un signal d'angle du côté de sortie de colonne dudit dispositif de direction ;
une section de détermination d'état de direction (110) destinée à déterminer un état de direction sur la base dudit signal d'angle du côté d'entrée de colonne et dudit signal d'angle du côté de sortie de colonne, et à délivrer un signal de maintien de direction et des informations de direction ; et
une section de limitation de courant (120) destinée à limiter ladite valeur de consigne de courant de sortie de commande de couple sur la base dudit signal d'angle du côté d'entrée de colonne, dudit signal d'angle du côté de sortie de colonne, dudit signal de maintien de direction et desdites informations de direction parmi marche avant/marche arrière,
dans lequel pour ledit signal d'angle du côté d'entrée de colonne et ledit signal d'angle du côté de sortie de colonne, ladite section de détermination d'état de direction (110) comprend :

des sections de définition (111s, 112s, 111r, 112r) destinées à définir des largeurs d'hystérésis respectives pour ledit signal d'angle de direction du côté d'entrée de colonne et ledit signal d'angle de direction du côté de sortie de colonne et à délivrer des signaux d'hystérésis respectifs qui indiquent une valeur de limitation supérieure de signal d'angle et une valeur de limitation inférieure de signal d'angle ;
des sections de calcul (113s, 114s, 113r, 114r) destinées à calculer des valeurs centrales d'hystérésis en comparant ledit signal d'angle de direction du côté d'entrée de colonne et ledit signal d'angle de direction du côté de sortie de colonne avec lesdits signaux d'hystérésis respectifs ; et
des sections de détermination (115s, 115r, 116, 117) destinées à déterminer un état de direction parmi un maintien de direction et une marche avant ou une marche arrière sur la base d'une modification de ladite valeur centrale d'hystérésis et d'une direction d'assistance,
dans lequel ladite largeur d'hystérésis dudit signal d'angle de direction du côté d'entrée de colonne est définie en ajoutant ou en soustrayant une première valeur qui est supérieure à une largeur de bruit dudit signal d'angle de direction du côté d'entrée de colonne et inférieure à 0,2 [deg], audit ou dudit signal d'angle de direction du côté d'entrée de colonne détecté à partir dudit capteur d'angle de direction du côté d'entrée de colonne (22),
dans lequel ladite largeur d'hystérésis dudit signal d'angle de direction du côté de sortie de colonne est définie en ajoutant ou en soustrayant une seconde valeur qui est supérieure à une largeur de bruit du signal d'angle de direction du côté de sortie de colonne et inférieure à un frottement dudit arbre de colonne, audit ou dudit signal d'angle de direction du côté de sortie de colonne détecté à partir dudit capteur d'angle de direction du côté de sortie de colonne (24), et
dans lequel ladite section de limitation de courant (120) réalise une limitation de courant sur ladite valeur de consigne de courant de sortie de commande de couple sur une plage de courant pour lequel un état de maintien de direction est maintenu.

8. Dispositif de direction assistée électrique selon la revendication 7,

dans lequel ladite section de détermination d'état de direction (110) délivre ledit signal de maintien de direction comme un état de maintien de direction lorsque lesdits maintiens de direction sont déterminés au même moment au niveau de sections de détermination (115s, 115r, 116, 117) respectives pour ledit signal d'angle du côté d'entrée de colonne et ledit signal d'angle du côté de sortie de colonne,
dans lequel lesdites sections de détermination (115s, 115r, 116, 117) comprennent :

des sections de détermination (115s, 115r) qui sont agencées pour ledit signal d'angle du côté d'entrée de colonne et ledit signal d'angle du côté de sortie de colonne et délivrent un signal de maintien de direction du côté d'entrée de colonne et des informations de direction du côté d'entrée de colonne, et un signal de maintien de direction du côté de sortie de colonne et des informations de direction du côté de sortie de colonne sur la base de ladite valeur centrale d'hystérésis et de ladite direction d'assistance ; et
un circuit logique (116, 117) destiné à délivrer ledit signal de maintien de direction et lesdites informations de direction par un calcul logique dudit signal de maintien de direction du côté d'entrée de colonne et dudit signal de maintien de direction du côté de sortie de colonne, et desdites informations de direction du côté d'entrée de colonne et desdites informations de direction du côté de sortie de colonne.

9. Dispositif de direction assistée électrique selon la revendication 8,

dans lequel, dans ledit état de maintien de direction, ledit dispositif de direction assistée électrique verrouille ladite valeur de consigne de courant de sortie de commande de couple,

réalise ladite limitation de courant en modifiant progressivement une valeur de consigne de courant, qui est considérée comme un frottement d'un arbre de colonne, sur la base d'une valeur de commande de courant de sortie de couple verrouillée,

dans ladite limitation de courant, compare ladite valeur de consigne de courant de sortie de commande de couple à ladite valeur de limitation de courant,

limite à un courant minimum afin de maintenir ledit état de maintien de direction en délivrant une valeur minimum,

dans un cas de transition à partir dudit état de maintien de direction vers ladite marche avant, libère ladite limitation de courant, et

modifie immédiatement ladite valeur de commande de courant de sortie de commande de couple.

**10.** Dispositif de direction assistée électrique selon l'une quelconque des revendications 7 à 9, dans lequel ladite section de limitation de courant (120) comprend :

une section de verrouillage (122) destinée à verrouiller ladite valeur de consigne de courant de sortie de commande de couple, ledit signal d'angle du côté d'entrée de colonne et ledit signal d'angle du côté de sortie de colonne juste avant la transition à partir d'un état de marche avant vers ledit état de maintien de direction ;

une section de détermination de limitation (121) destinée à délivrer ledit signal d'angle du côté d'entrée de colonne, ledit signal d'angle du côté de sortie de colonne, un signal d'angle du côté d'entrée de colonne verrouillé, un signal d'angle du côté de sortie de colonne verrouillé et ledit signal de maintien de direction et délivre un signal de détermination ;

une section de limitation (123) destinée à entrer une valeur de consigne de courant de sortie de commande verrouillée et ledit signal de détermination, et délivre un courant de limitation; et

une section de sélection de valeur minimum (124) destinée à entrer ladite valeur de consigne de courant de sortie de commande de couple et ledit courant de limitation et à délivrer une valeur minimum en tant que valeur de limitation de courant.

**11.** Dispositif de direction assistée électrique selon la revendication 10, dans lequel lorsque ledit signal de maintien de direction est dans un état de maintien de direction, une différence entre ledit signal d'angle du côté d'entrée de colonne verrouillé et ledit signal d'angle du côté de sortie de colonne verrouillé est inférieure ou égale à une valeur prédéterminée et une différence entre ledit signal d'angle du côté de sortie de colonne verrouillé et ledit présent signal d'angle du côté de sortie de colonne est inférieure ou égale à une valeur prédéterminée, ladite section de détermination de limitation (121) détermine que ladite limitation de courant est valide.

FIG.1

PRIOR ART

FIG.2

PRIOR ART

EP 3 254 932 B1

FIG.3

CURRENT

STEER-
FORWARD

A HYSTERESIS IS EXISTED
IN A CURRENT
DUE TO A FRICTION
AT THE SAME
STEERING ANGLE

STEER-
BACKWARD

STEERING ANGLE

STEER-
BACKWARD

FRICTION IS EXISTED
FRICTION IS NOT EXISTED
FRICTION IS EXISTED

STEER-
FORWARD

PRIOR ART

FIG.4

LIMITING CURRENT VALUE (OUTPUT VALUE)
TORQUE CONTROL OUTPUT-CURRENT
COMMAND VALUE (INPUT VALUE)

CURRENT

STEER-
FORWARD

STEERING
HOLDING STATE

STEER-
FORWARD

START CURRENT LIMITING
(GRADUALLY CHANGING)

DECREASE
A CURRENT

DECREASE
A CURRENT

RELEASE CURRENT LIMITING
(GRADUALLY CHANGING)

SELECT THE MINIMUM
CURRENT VALUE

t0          t1       t2          t3   t4          t5 t6          TIME t

32

FIG.5

```
                    ┌─────────────┐
                    │    START    │
                    └──────┬──────┘
                           │
                           ▼          S1
                    ┌─────────────────┐
                    │     JUDGE       │
                    │ STEER-FORWARD   │
                    └────────┬────────┘
                             │
                             ▼         S2
                    ◇─────────────────◇        No
                    ◇  STEER-FORWARD ? ◇──────────────┐
                    ◇─────────────────◇               │
                           │ Yes                       │
                           ▼         S3                │
                    ┌─────────────────┐                │
                    │  LATCH PROCESS  │                │
                    └────────┬────────┘                │
                             │◄───────────────────────┘
                             ▼         S4
                    ┌─────────────────────┐
                    │ JUDGE STEERING HOLDING │
                    └───────────┬───────────┘
                                │
                                ▼       S200
                    ◇──────────────────────◇      No
                    ◇  STEERING HOLDING ?   ◇──────────────┐
                    ◇──────────────────────◇               │
                           │ Yes                            │
                           ▼      S201                      ▼      S202
                ┌────────────────────────┐      ┌─────────────────────────┐
                │   CURRENT LIMITING     │      │  RELEASE CURRENT LIMITING │
                │  (GRADUALLY CHANGING)  │      └────────────┬─────────────┘
                └───────────┬────────────┘                   │
                            │      S203                       │
                ┌────────────────────────┐                   │
                │        SELECT          │                   │
                │  THE MINIMUM CURRENT   │                   │
                └───────────┬────────────┘                   │
                            │◄──────────────────────────────┘
                            ▼
                    ┌─────────────┐
                    │     END     │
                    └─────────────┘
```

# FIG.6

TORQUE CONTROL
OUTPUT-CURRENT
COMMAND VALUE It

STEERING TORQUE Th →

VEHICLE SPEED Vel →

100

TORQUE
CONTROL
SECTION

120

LIMITING CURRENT VALUE Ir

130    37    38    20

CURRENT
CONTROL
SECTION

INVERTER    M

100A

SIGN
JUDGING
SECTION

STEERING HOLDING SIGNAL HS
(ON/OFF)

ASSIST DIRECTION AD    110

STEERING
STATE
JUDGING
SECTION

CURRENT
LIMITING
SECTION

Im

STEERING INFORMATION ST
(STEER-FORWARD/
STEER-BACKWARD)

COLUMN INPUT-SIDE
ANGLE SIGNAL  θs1

COLUMN OUTPUT-SIDE
ANGLE SIGNAL    θr1

# FIG.7

STEERING STATE JUDGING SECTION 110

111s

ANGLE SINGNAL
UPPER-LIMITING
VALUE CALCULATING
SECTION

θUs

COLUMN INPUT-SIDE
ANGLE SIGNAL  θs1

112s

ANGLE SIGNAL
LOWER-LIMITING
VALUE CALCULATING
SECTION

θDs

113s

HYSTERESIS
CENTRAL
VALUE
CALCULATING
SECTION

HCUs

115s

STEERING
JUDGING
SECTION

HSU

STU

114s

$Z^{-1}$

$HCUs^{-1}$

116

HS
("0"→STEERING
"1"→STEERING HOLDING)

ASSIST DIRECTION AD
(RIGHT/LEFT)

111r

ANGLE SIGNAL
UPPER-LIMITING
VALUE CALCULATING
SECTION

θUr

113r

COLUMN
OUTPUT-SIDE
ANGLE SIGNAL  θr1

112r

ANGLE SIGNAL
LOWER-LIMITING
VALUE CALCULATING
SECTION

θDr

HYSTERESIS
CENTRAL
VALUE
CALCULATING
SECTION

HCUr

117

ST
("0"→STEER-FORWARD
"1"→STEER-BACKWARD  )

115r

STEERING
JUDGING
SECTION

HSD

STD

114r

$Z^{-1}$

$HCUr^{-1}$

34

## FIG.8

CURRENT LIMITING SECTION 120

TORQUE CONTROL OUTPUT-
CURRENT COMMAND VALUE It

122 LATCH COMPLETED It (It')

STEERING INFORMATION ST → LATCH SECTION

LATCH COMPLETED
θs1 (θs1')

LATCH COMPLETED
θr1 (θr1')

COLUMN INPUT-SIDE
ANGLE SIGNAL θs1

COLUMN OUTPUT-SIDE
ANGLE SIGNAL θr1

STEERING HOLDING SIGNAL HS

121 LIMITING JUDGING SECTION

JS

123 Itm LIMITING SECTION (INCLUDING GRADUALLY CHANGING)

124 MINIMUM VALUE SELECTING SECTION → LIMITING CURRENT VALUE Ir

## FIG.9

1 HANDLE

21 HALL-IC SENSOR — 2A

AS_IS ANGLE
θh    (296° PERIOD)

22  20° ROTOR SENSOR

COLUMN INPUT-SIDE ANGLE SIGNAL
θs    (20° PERIOD)

23 TORSION BAR

24  40° ROTOR SENSOR

COLUMN OUTPUT-SIDE
ANGLE SIGNAL
θr    (40° PERIOD)

20  MOTOR

3 REDUCTION GEARS — 2B

50 STEERING ANGLE CALCULATING SECTION

STEERING ANGLE
→ θs1
→ θr1

STEERING ANGLE

35

FIG.10

```
                    ┌─────────────┐
                    │    START    │
                    └─────────────┘
                           │
                           ▼                    S101
        ┌──────────────────────────────────────┐
        │  COLUMN INPUT-SIDE ANGLE SIGNAL       │
        │  HYSTERESIS PROCESS                   │
        └──────────────────────────────────────┘
                           │
                           ▼                    S102
        ┌──────────────────────────────────────┐
        │  COLUMN OUTPUT-SIDE ANGLE SIGNAL      │
        │  HYSTERESIS PROCESS                   │
        └──────────────────────────────────────┘
                           │
                           ▼                    S110
```

(COLUMN INPUT-SIDE
STEERING HOLDING JUDGING
= STEERING HOLDING STATE) AND
(COLUMN OUTPUT-SIDE
STEERING HOLDING JUDGING
= STEERING HOLDING STATE) ?                No

Yes                     S140                                              S150

JUDGING RESULT = STEERING HOLDING STATE            JUDGING RESULT = STEERING STATE

```
                    ┌─────────────┐
                    │     END     │
                    └─────────────┘
```

FIG.11

```
                    ┌─────────────┐
                    │    START    │
                    └─────────────┘
                           │
                           ▼
```

SIGN OF                    S160
(ACTUAL STEERING ANGLE -
HYSTERESIS CENTRAL VALUE )
= SIGN OF ASSIST DIRECTION ?                No

Yes                     S161                                              S162

STEERING JUDGING = STEER-FORWARD            STEERING JUDGING = STEER-BACKWARD

```
                    ┌─────────────┐
                    │     END     │
                    └─────────────┘
```

36

**FIG.12**

```
                    START
                      │
                      │                    S111
          ┌───────────────────────────┐
          │  CALCULATE ANGLE SIGNAL   │
          │   UPPER-LIMITING VALUE    │
          └───────────────────────────┘
                      │                    S112
          ┌───────────────────────────┐
          │  CALCULATE ANGLE SIGNAL   │
          │   LOWER-LIMITING VALUE    │
          └───────────────────────────┘
```

CALCULATE HYSTERESIS CENTRAL VALUE

S120 — ANGLE SIGNAL UPPER-LIMITING VALUE < PREVIOUS HYSTERESIS CENTRAL VALUE ?  — No

Yes

S122 — ANGLE SIGNAL LOWER-LIMITING VALUE ≥ PREVIOUS HYSTERESIS CENTRAL VALUE ? — No

Yes

S121 — PRESENT HYSTERESIS CENTRAL VALUE = ANGLE SIGNAL UPPER-LIMITING VALUE

S123 — PRESENT HYSTERESIS CENTRAL VALUE = ANGLE SIGNAL LOWER-LIMITING VALUE

S124 — PRESENT HYSTERESIS CENTRAL VALUE = PREVIOUS HYSTERESIS CENTRAL VALUE

JUDGE STEERING HOLDING

S130 — PRESENT HYSTERESIS CENTRAL VALUE = PREVIOUS HYSTERESIS CENTRAL VALUE ? — No

Yes

S131 — JUDGING RESULT = STEERING HOLDING STATE

S132 — JUDGING RESULT = STEERING STATE

```
                    END
```

## FIG.13A

STEERING ANGLE

| STEERING ROTATIONAL DIRECTION : LEFT | STEERING ROTATIONAL DIRECTION : RIGHT | STEERING ROTATIONAL DIRECTION : LEFT |

CENTER

TIME t

HYSTERESIS CENTRAL VALUE

ACTUAL STEERING ANGLE

## FIG.13B

CURRENT[A]

| ASSIST DIRECTION : RIGHT | ASSIST DIRECTION : LEFT | ASSIST DIRECTION : RIGHT | ASSIST DIRECTION : LEFT |

" + " SIDE

0

TIME t

" – " SIDE

CURRENT COMMAND VALUE

| STEER- BACKWARD | STEER- FORWARD | STEER- BACKWARD | STEER- FORWARD | STEER- BACKWARD | STEER- FORWARD |

t10      t11      t12      t13      t14      t15

38

# FIG.14A

STEER-FORWARD JUDGING EXAMPLE

ASSIST
DIRECTION

STEERING
ROTATIONAL
DIRECTION

# FIG.14B

STEER-BACKWARD JUDGING EXAMPLE

ASSIST
DIRECTION

STEERING ROTATIONAL
DIRECTION

# FIG.15

(g) WHEN TRANSITING FROM STEERING HOLDING STATE TO STEER-FORWARD, CURRENT LIMITING IS IMMEDIATELY RELEASED.

STEER-FORWARD

(a)

(b)

FRICTION IS EXISTED

(c)

(f)

FRICTION IS NOT EXISTED

A CURRENT DECREASES IN STEERING HOLDING.
WHEN TRANSITING FROM STEERING HOLDING STATE TO STEER-BACKWARD, CURRENT LIMITING MAY NOT BE IMMEDIATELY RELEASED.

STEER-BACKWARD

(e)

(d)

FRICTION IS EXISTED

# FIG.16

ANGLE

HYSTERESIS FILTER "A" UPPER LIMITING VALUE

WHEN A CURRENT ANGLE
IS LESS THAN A HYSTERESIS
WIDTH "B" IN A STEERING
HOLDING STATE,
A HYSTERESIS FILTER "B" IS USED.

WHEN A HYSTERESIS CENTRAL VALUE
OF A HYSTERESIS FILTER "A"
IS CHANGED,
A USE OF A HYSTERESIS FILTER "B"
IS RELEASED.

HYSTERESIS FILTER "B"
UPPER-LIMITING VALUE

HYSTERESIS FILTER "A"
UPPER-LIMITING VALUE

HYSTERESIS CENTRAL VALUE
OF HYSTERESIS FILTER "A"

HYSTERESIS CENTRAL VALUE
OF HYSTERESIS FILTER "B"

HYSTERESIS FILTER "B"
LOWER-LIMITING VALUE

HYSTERESIS FILTER "A"
LOWER-LIMITING VALUE

HYSTERESIS FILTER "A"
LOWER-LIMITING VALUE

t20    t21    t22    t23    t24 t25    TIME t

# FIG.17

TORQUE CONTROL OUTPUT-CURRENT COMMAND VALUE It

STEERING TORQUE Th

VEHICLE SPEED Vel

100
TORQUE
CONTROL
SECTION

120A

LIMITING CURRENT VALUE Ir

HOLDING STEERING
SIGNAL HS (ON/OFF)

COLUMN INPUT-SIDE
ANGLE SIGNAL θs1

COLUMN OUTPUT-SIDE
ANGLE SIGNAL θr1

STEERING
STATE
JUDGING
SECTION

CURRENT
LIMITING
SECTION

130
CURRENT
CONTROL
SECTION

37
INVERTER

38

20
M

140

STEERING INFORMATION ST
(STEER-FORWARD/STEER-BACKWARD)

Im

40

**FIG.18**

STEERING STATE JUDGING SECTION 140

COLUMN
INPUT-SIDE
ANGLE SIGNAL $\theta$ s1

141 — HYSTERESIS FILTER "A" — HAs

148 Tgs — HYSTERESIS FILTER JUDGING SECTION

142 — HYSTERESIS FILTER "B" — HBs

143 — STEERING INFORMATION JUDGING/ STEERING HOLDING JUDGING SECTION

COLUMN IMPUT-SIDE STEERING INFORMATION STs

COLUMN INPUT-SIDE STEERING HOLDING INFORMATION HSs

147 — AND → HS

COLUMN
OUTPUT-SIDE
ANGLE SIGNAL $\theta$ r1

144 — HYSTERESIS FILTER "A" — HAr

149 Tgr — HYSTERESIS FILTER JUDGING SECTION

145 — HYSTERESIS FILTER "B" — HBr

146 — STEERING INFORMATION JUDGING/ STEERING HOLDING JUDGING SECTION

COLUMN OUTPUT-SIDE STEERING INFORMATION STr

COLUMN OUTPUT-SIDE STEERING HOLDING INFORMATION HSr

**FIG.19**

COLUMN INPUT-SIDE
ANGLE SIGNAL $\theta$ s1

141-1 — ANGLE SIGNAL UPPER-LIMITING VALUE CALCULATING SECTION — $\theta$ UAs

141-2 — ANGLE SIGNAL LOWER-LIMITING VALUE CALCULATING SECTION — $\theta$ DAs

141-4 — $Z^{-1}$ — HAs$^{-1}$

141-3 — HYSTERESIS CENTRAL VALUE CALCULATING SECTION — HAs

41

# FIG.20

HYSTERESIS TRIGGER SIGNAL Tgs ----→

142-1

COLUMN INPUT-SIDE
ANGLE SIGNAL θs1

ANGLE SIGNAL
UPPER-LIMITING VALUE
CALCULATING SECTION

θUBs

142-3

142-2

ANGLE SIGNAL
LOWER-LIMITING VALUE
CALCULATING SECTION

θDBs

HYSTERESIS
CENTRAL
VALUE
CALCULATING
SECTION

HBs

HYSTERESIS CENTRAL VALUE HAs

142-4

HBs⁻¹

Z⁻¹

142-5

PREVIOUS
HYSTERESIS
CENTRAL VALUE
CORRECTING SECTION

HAss

# FIG.21

```
         ┌─────────────────────────┐
         │    STEERING JUDGING     │
         │         START           │
         └────────────┬────────────┘
                      │
                      ▼                          S10
         ┌─────────────────────────────────────┐
         │   HYSTERESIS FILTER "A" PROCESS      │
         │  (COLUMN INPUT-SIDE ANGLE SIGNAL)    │
         └────────────┬────────────────────────┘
                      │
                      ▼                          S20
         ┌─────────────────────────────────────┐
         │   HYSTERESIS FILTER "A" PROCESS      │
         │  (COLUMN OUTPUT-SIDE ANGLE SIGNAL)   │
         └────────────┬────────────────────────┘
                      │
                      ▼                          S30
         ┌─────────────────────────────────────┐
         │        HYSTERESIS FILTER            │
         │        SWITCHING JUDGING            │
         └────────────┬────────────────────────┘
                      │
                      ▼                          S40
              ◇ HYSTERESIS TRIGGER ◇ ────────────┐
                  SIGNAL ON ?         No          │
                   │ Yes                          │
                   ▼                      S50      │
         ┌─────────────────────────────────────┐  │
         │   HYSTERESIS FILTER "B" PROCESS      │  │
         │  (COLUMN INPUT-SIDE ANGLE SIGNAL)    │  │
         └────────────┬────────────────────────┘  │
                      │                             │
                      ▼                      S60    │
         ┌─────────────────────────────────────┐  │
         │   HYSTERESIS FILTER "B" PROCESS      │  │
         │  (COLUMN OUTPUT-SIDE ANGLE SIGNAL)   │  │
         └────────────┬────────────────────────┘  │
                      │◄────────────────────────────┘
                      ▼                          S70
         ┌─────────────────────────────────────┐
         │    STEERING INFORMATION JUDGING     │
         └────────────┬────────────────────────┘
                      │
                      ▼                          S80
         ┌─────────────────────────────────────┐
         │      STEERING HOLDING JUDGING       │
         └────────────┬────────────────────────┘
                      │
                      ▼
         ┌─────────────────────────┐
         │    STEERING JUDGING     │
         │          END            │
         └─────────────────────────┘
```

## FIG.22

# FIG.23

311   $\theta$11   312   $\theta$c1   313   Sj1

FIRST
HYSTERESIS
WIDTH
SETTING
SECTION

$\theta$12

FIRST
HYSTERESIS
CENTRAL VALUE
CALCULATING
SECTION

FIRST
HYSTERESIS
CENTRAL VALUE
CHANGING
DETECTING
SECTION

314

$\theta$cp1

PAST
VALUE
RETAINING
SECTION

50   $\theta$s1

TS_IS ANGLE $\theta$s

TS_OS ANGLE $\theta$r

STEERING
ANGLE
CALCULATING
SECTION

$\theta$r1

400

STEERING
HOLDING
STATE
DETECTING
SECTION

SECOND STEERING STATE JUDGING SECTION  320

321   $\theta$21   322   $\theta$c2   323   Sj2

SECOND
HYSTERESIS
WIDTH
SETTING
SECTION

$\theta$22

SECOND
HYSTERESIS
CENTRAL VALUE
CALCULATING
SECTION

SECOND
HYSTERESIS
CENTRAL VALUE
CHANGING
DETECTING
SECTION

324

$\theta$cp2

PAST
VALUE
RETAINING
SECTION

EP 3 254 932 B1

FIG.24

```
                    ┌──────────────┐
                    │    START     │
                    └──────┬───────┘
                           │           S300
                    ┌──────▼───────┐
                    │ CALCULATE θs1│
                    └──────┬───────┘
                           │           S301
                    ┌──────▼───────┐
                    │ CALCULATE θr1│
                    └──────┬───────┘
                           │           S302
                   ┌───────▼────────┐
                   │ FIRST STEERING │
                   │ JUDGING PROCESS│
                   └───────┬────────┘
                           │           S303
                   ┌───────▼────────┐
                   │ SECOND STEERING│
                   │ JUDGING PROCESS│
                   └───────┬────────┘
                           │
                           │                S310
                      ◇────▼─────◇
              "PROVISIONAL STEERING        No
                 HOLDING STATE"  ────────────────────┐
                      ◇──────────◇                    │
                           │                          │
                          Yes                         │
                           │  S311                    │  S312
              ┌────────────▼─────────┐    ┌──────────▼───────────────────┐
              │  DETECTING RESULT =  │    │ DETECTING RESULT = STEERING  │
              │ STEERING HOLDING STATE│   │           STATE              │
              └────────────┬─────────┘    └──────────┬───────────────────┘
                           │◄────────────────────────┘
                    ┌──────▼───────┐
                    │     END      │
                    └──────────────┘
```

## FIG.25

```
        ┌─────────────────────────┐
        │   STEERING JUDGING      │
        │   PROCESS START         │
        └─────────────────────────┘
                    │
                    ▼                      S330
        ┌─────────────────────────┐
        │ CALCULATE STEERING ANGLE│
        │ UPPER-LIMITING VALUE    │
        └─────────────────────────┘
                    │
                    ▼                      S331
        ┌─────────────────────────┐
        │ CALCULATE STEERING ANGLE│
        │ LOWER-LIMITING VALUE    │
        └─────────────────────────┘
                    │
                    ▼                      S332
              ╱─────────────╲
             ╱ $\theta_{cp1}$>STEERING ANGLE╲
            ╱ UPPER-LIMITING VALUE ? ╲──── No
             ╲                    ╱              │
              ╲──────────────╱                  ▼            S333
                    │                      ╱──────────────╲
                   Yes                    ╱ $\theta_{cp1}$≦STEERING ANGLE ╲
                    │                    ╱ LOWER-LIMITING VALUE ? ╲──── No
                    │                     ╲                    ╱        │
                    │                      ╲──────────────╱            │
                    │                            │                      │
                    │                           Yes                     │
```

| $\theta_{c1}$ = STEERING ANGLE UPPER-LIMITING VALUE | $\theta_{c1}$ = STEERING ANGLE LOWER-LIMITING VALUE | $\theta_{c1} = \theta_{cp1}$ |
|---|---|---|

S334     S335     S336

```
                    │
                    ▼                      S337
              ╱─────────────╲
             ╱ $\theta_{c1} = \theta_{cp1}$ ? ╲──── No
              ╲──────────────╱                    │
                    │                             │
                   Yes                            │
                    │                             │
                    ▼            S338             ▼            S339
        ┌─────────────────────────┐   ┌─────────────────────────┐
        │ PROVISIONAL STEERING    │   │ PROVISIONAL STEERING    │
        │ INFORMATION =           │   │ INFORMATION =           │
        │ PROVISIONAL STEERING    │   │ PROVISIONAL STEERING    │
        │ HOLDING STATE           │   │ STATE                   │
        └─────────────────────────┘   └─────────────────────────┘
                    │                             │
                    ▼◄────────────────────────────┘
        ┌─────────────────────────┐
        │   STEERING JUDGING      │
        │   PROCESS END           │
        └─────────────────────────┘
```

47

FIG.26

FIG.27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4815958 B
- JP 3915964 B
- DE 4333161 A1
- JP 2011051537 A